# EUROPEAN PATENT SPECIFICATION

(11) **EP 3 558 623 B1**
(45) Date of publication and mention of the grant of the patent: **04.09.2024**
(21) Application number: 17884788.5
(22) Date of filing: 21.12.2017
(51) Int. Cl.: B29C 45/57, B29C 45/26, B29D 11/00, B29C 45/17, B29C 45/72, B29C 45/77, B29L 11/00

(54) **MOULDING PROCESS HAVING ACTIVE FORCE COUPLED COOLING**
FORMVERFAHREN MIT AKTIVER KRAFTGEKOPPELTER KÜHLUNG
PROCESSUS DE MOULAGE AYANT UN REFROIDISSEMENT COUPLÉ À UNE FORCE ACTIVE

(30) Priority: 22.12.2016 AU 2016905325
(43) Date of publication of application: 30.10.2019
(73) Proprietor: Modi Consulting and Investments Pty Ltd, Burwood East, VIC 3151 (AU)
(72) Inventor: MODI, Jayesh, Burwood East Victoria Vic 3151 (AU); STIELER, Ulrich, 38640 Gosslar (DE)
(74) Representative: Wittmann, Günther
(86) International application number: PCT/IB2017/058305
(87) International publication number: WO 2018/116254

(56) References cited:
- WO-A1-93/01039
- WO-A1-93/01039
- DE-A1- 102009 047 735
- US-A1- 2002 160 152
- US-A1- 2002 160 152
- US-A1- 2012 171 452
- US-A1- 2014 332 991
- US-A1- 2016 082 629
- US-A1- 2016 082 629
- US-A1- 2016 279 852

## Description

### Background to the invention

Injection moulding tools are used in industry to form thermoplastic polymers into a variety of complex shapes. The process involves injection of a pre-prepared pliable thermoplastic into a tool, whereupon it acquires the shape of the mould cavity within the tool. The thermoplastic is then cooled so that it sets while retaining the shape of the cavity. Other common terms for the tool are mould or die, made up of in simplest form a cavity and core with a common plane called parting line where from the cavity and core separate allowing for removal of moulded article.

It is a property of molten resin that it has a very large, typically 20 to 30% volumetric shrinkage when it transacts from liquid to solid phase. That shrinkage is invariably not acceptable and hence extra material is pushed into the tool compressing the pliable thermoplastic during part of moulding process known as packing stage. However, that leads to stress in the moulded part due to flow of liquid in already solidifying resin in the mould, flow induced shear thinning and temperature rise in the flow and different rate of solidification on account of thickness and cooling rate variation leading to eventual differential shrinkage and internal stress. These stresses are the result of locally varying densities within the moulded part. The speed of light propagation is affected by the material density and its variation in moulded optical element in turn leads to different light speeds within the moulded optical element which in application can lead to poor performance for example double refraction and birefringence.

Also when the part to be moulded is thin on the outside and thick zone in the middle and material has to be injected from thin edge for example moulding of a spherical and aspherical lens the thin edge freezes off lot before central thick zone that leads to gross defects in form of sink marks as volumetric shrinkage continues in the thick zone or sometimes can lead to internal shrinkage that appears as bubbles or vacuum voids in the part making it un-fit for purpose optically or structurally as the case may be.

US 4,563,324 discloses a method of injection moulding showing means of application of external force inside a cavity, however the disclosed arrangement suffers from high internal stress and not applicable to moulding of optical elements.

US 4,659,533 A discloses a process for the formation of large void-free thermoplastic articles. Large thermoplastic articles are injection molded, cooled to a self-supporting temperature, transferred to a vessel, the articles being maintained under fluid pressure sufficient to prevent the formation of voids on cooling to ambient temperature. It has to be waited a time to gain the "self-supporting temperature", contaminates the part and has no control over final shape post cooling and logically limited to simple non critical applications, which are not suitable to precision optical components and not suitable for overmoulding.

US 2014/0332991A1 discloses a method of lens moulding having intermediate cooling stations. The method has major limitation a long time has to be waited to gain the "self-supporting temperature" until the part can be handled and is able to hold its shape when transferred to the cooling stations. The method contaminates the part and has no control over final shape post cooling and fails to compensate for additional shrinkage of central thick part hence likely to suffer with high stress and risk of voids particularly for very thick lenses.

WO 93/01039 A1 discloses a method and apparatus for injection moulding thermoplastic polymers wherein a layer of pressurised gas is provided between at least selected moulded parts and the cooling polymer. The gas takes up shrinkage as the polymer cools and allows visual sink marks to be substantially eliminated. Furthermore, cycle times are reduced, fast cooling being permitted by urging the polymer against the outer mould and cooling the outer mould.

US 2016/0082629 A1 discloses a method for manufacture of an overmoulded article made up of at least two parts, so arranged that moulding first part according to parameters that are adapted for fastest possible cycle time without having any regard to temperature required at interface of second part moulding, cooling first part rapidly followed by heating face of the first part by application of heat before the said first part has completely cooled to room temperature, so characterized that at end of heating there exists at least three temperature zones in the first part.

US 2002/0160152 A1 discloses a plastic molding having high accuracy includes at least one transfer surface and at least one imperfect transfer portion 1 having a concave or convex shape. The mold assembly includes a cavity into which molten resin is injected, a slide cavity piece which is capable of being slid at a prescribed time so that a gap is formed between the resin and the slide cavity piece, and a vent hole for supplying a compressed gas in the cavity. A method of producing the plastic molding includes the steps of heating resin to provide a molten resin, injecting the molten resin into a cavity of a molding, applying a resin-pressure to the molten resin, cooling the resin, sliding the slide cavity piece, and opening the mold assembly.

DE 10 2009 047 735 A1 discloses a method and a device for manufacturing optical components, wherein a preform is produced in an injection mold and then and then finished in an embossing tool.

Various effort are made in prior art to overcome some of the challenges.

It is an object of the invention to overcome the above disadvantages. It would be desirable improvement in moulding technology capable of moulding very thick articles having varying thickness at fast production rate without defects like internal voids and is intent of the present invention.

### Summary of the Invention

A thick thermoplastic article having varying thicknesses is injection moulded according to the present invention by including two stages of injection of a material filling stage and a packing stage, cooled for a predetermined time by a first cooling at least including duration of filling stage and packing stage at end of which a first runner is blocked and further cooling by a second cooling under application of external force, characterized in that application of the external force deforms adaptively at least one surface of the first part said first surface causing higher displacement at a first region having a lower density and a lower strength compared to a displacement at a second region having a higher density and a higher strength and advantageously the application of force adapts to change the location of the first region and the second region that may arise as the first part continues to solidify ensuring that the rate of displacement in the first region is higher than that in the second region reducing difference between a maximum and a minimum thickness of the first part producing the first part advantageously free of internal voids having uniform density and reduced internal stress.

The method for moulding of a thermoplastic article is defined by the appended claims.

It has to be noted here that cooling the first part, a first cooling comprising total duration of the first filling stage and the first packing stage and optionally a small time increment of few seconds so configured that end of the first cooling the first part was not allowed enough time necessary to fully solidify and has at least two regions defined by its structural strength and/or density: first region having lower structural strength and/or lower density generally associated with thickest portion of the first part and second region having higher structural strength and/or higher density generally associated with thinnest portion of the first part. After end of first packing stage the first runner is blocked and means of block include but not limited to freezing the first runner for example by application of CO₂ cooling solidifying it or by way of activation of blocking means in a simple form a pin is activated by application of force blocking off the first runner completely, subsequent to blocking of the first runner and end of the first cooling further cooling to solidification second cooling is continued under application of external force so characterized that application of the external force deforms adaptively at least one surface of the first part say the first surface causing higher displacement at first region compared to displacement at second region and advantageously the application of force adapts to redistribution of the first region and the second region that may arise as the first part continues to solidify ensuring rate of displacement in the first region is higher than that in the second region reducing difference between maximum and minimum thickness of the first part producing the first part advantageously free of internal voids having uniform density and reduced internal stress.

The above method comprising steps of:
- Overmoulding the first part at a second moulding station, which may be part of a second moulding machine, said second molding station comprising a second moulding tool assembly comprising shape defining elements core 2 and cavity 2 that, when fully closed define a second chamber enclosing a fixed second volume separable at its parting line where from overmoulded second part can be removed, said second moulding tool assembly having internal means of heat removal and further comprising second runner flowably communicating between the second chamber and the moulding machine melt passage second melt passage the second core, the second cavity, the second runner and means of blocking make up the second set and for the process of producing overmoulded second part wherein
- the first part is positioned in a predefined position inside the space defined by the second core or the second cavity after closing the second core and the second cavity,
- Injecting pliable polymer resin second resin via the second runner in the second chamber either on one or both sides of the first part contained within till it is completely filled as per predetermined third process parameters and cooling third cooling is continued by passage of cooling medium through the internal means of heat removal,
- Introduction of additional material into the second chamber flowing via the second runner under fourth process parameters second packing stage,
- Blocking the second runner immediately after end of the second packing stage,
- Cooling fourth cooling under application of external load by passage of cooling medium through the internal means of heat removal.

Advantageously the first moulding tool and second moulding tool are integrated in one and located on a moulding machine having suitable means of directing melt to either the first melt passage or the second melt passage or both and in non limiting case the first resin and the second resin are the same.

The method according to any one of previous discussion wherein the cooling under application of external load after the packing phase is carried out at a location outside the injection moulding machine, wherein the process of second cooling or the fourth cooling is carried out away from the moulding machine may comprise the steps of:
- Locking the first set and/or second set whilst on respective moulding station releasing them from respective moulding tool assembly,
- Transferring a subassembly first kit made up of the first set and the first part contained therein and/or second kit made up of the second set and the overmoulded second part contained therein to an intermediate holding facility;
   - means of heat exchange fluid supply and optionally recirculation get connected to internal means of heat transfer in the first set and/or the second set ensuring that the first part or the second part is never exposed to outside atmosphere till end of the second cooling or the fourth cooling which advantageously is occurring outside respective moulding station,
   whilst the first part and/or the overmoulded second part are cooling the moulding machine continues to mould yet another the first part or the overmoulded second part or a third part independent of the first part or the overmoulded second part each having its own unique processing parameters improving productivity of the moulding machine.

The cooling under application of external force may be carried out inside tool inserts so configured that they form a sealed gas tight volume between say the first surface and corresponding face of the tool insert when closed wherein a small gap first gap is developed as the first part starts to shrink on solidification and uniform force on substantially entirety of the first Surface is applied by application of high pressure gas advantageously combined with cooling by flowing low temperature gas including but not limited to high pressure nitrogen gas so configured that it preferably flows over entire the first surface and exits in a controlled manner via a back pressure mechanism.

Method according to any one of the preceding discussion, wherein cooling under application of external force is carried out in tool inserts configured with having a elastically flexing membrane The first flexing membrane having a first and second opposing face fixed to a corresponding side of the at least one of the first core, the first cavity, the second core, the second cavity, making hermetically tight connection at its periphery defining a closed space therein, wherein the first opposing face is advantageously in full contact with say the first surface and fluidic pressure is applied on the second opposing face and the first flexing membrane continues to deform on application of the pressure transmitting force on to the first surface advantageously application of force is combined with passing heat exchange fluid under pressure having entry and exit points so configured that it is directed to flow substantially over entire second opposing face, whilst maintaining pressure thus providing cooling of the first part under force.

The first part and/or the overmoulded second part according to any of preceding discussion in non-limiting case comprises a central generally bulbous area surrounded by planar thick area at its periphery and the first flexing membrane is mounted on a movable piston contacting the bulbous area and piston having two ends, first end in contact with the planar thick area and another end connected to means of actuation of the piston, the piston is integrated within corresponding side of at least one of the first core, the first cavity, the second core, the second cavity, and cooling under application of external force is carried out by advancing the piston applying force on the planar thick area and the first flexing membrane provides flexible contact with the bulbous area maintaining force as its size and shape is changing relative to the planar flat area as it solidifies and by way of example only piston is advanced by application of hydraulic pressure and application of force to the first flexing membrane is by way of example only application of hydraulic or pneumatic pressure advantageously the piston is provided with internal means of heat exchange through which heat exchange medium is circulated and advancement of piston and application of force to the first flexing membrane is either sequential or simultaneously and pressure exerted on to the first part by the piston and by the first flexing membrane is independently controlled improving upon compression injection moulding process reducing stress in moulded article.

The second cooling and/or fourth cooling under application of force may be carried out by at least one of the following steps:
- Moulding the first part in the first chamber having a volume the first volume, wherein either the first core and/or the first cavity are provided with independently movable set of inserts having internal means of heat removal made up of at least a first insert having a first and a second end and a second insert having a first and second end, wherein the first end of the first insert and the first end of the second insert make up part of the moulding surface and the second end of the first insert and the second end of the second insert, when furthest removed from it have adjustable travel stops, wherein the first insert and the second insert have only one degree of freedom allowing sliding motion relative to each other and to the first core and/or the first cavity, that can be connected to independent means of actuation, and
- Activation of independently controlled actuators either integrated in or connected to the second end of the first insert and the second end of the second insert moving them outwards simultaneously or in a programmed sequence or combined with pulsing them axially in direction of travel.

Method according to above, wherein the travel of the first insert and the second insert continues until it reaches its individual travel stops so configured that at end of travel the first chamber volume is reduced to second volume which closely matches that of the first part when fully solidified and the first end of the first insert and the first end of the second insert generally coincide with final shape of the solidified the first part, when cooled to predetermined ejection temperature producing the first part or the overmoulded second part having uniform density and free of internal voids and minimal stress.

The method may comprise at least one of the following steps:
- After predetermined time at the intermediate holding facility transferring the second kit to a transfer station (swap) advantageously maintained under controlled atmosphere of positive pressure high purity inert gas where the second part contained within is ejected, and the empty set is returned back to holding facility, where it is advantageously preheated,
- After predetermined time at the intermediate holding facility transferring the first kit and an empty preheated second set to the swap, where the first part contained within first set is transferred to the second set and the empty first set is returned back to holding facility where it is advantageously preheated,
- After locking the second set containing the first part transferring the second set to the second moulding station, where the first part is overmoulded and wherein the second moulding station may be the same as the first moulding station and, the second moulding tool and the first moulding tool are the same and are capable of receiving the first set and the second set and the second injection moulding machine and the first injection moulding machine are the same and has provision to carry out injection moulding with parameters defined uniquely for each of the moulding operations and the first resin and the second resin are same,
- Controlling the entire process of kit transfer, cooling, part transfer and injection moulding by a computerised control identifying the first kit and the second kit with associated process data for example by RFID chip mounted on each kit,
- Advantageously at least a portion of the first surface and/or the second surface that is to be bonded permanently with the second part is heated or activated,
- The first moulding tool and/or the second moulding tool may consist of sub cavities configured for multiple first part and/or the second part.

The moulding tool assembly may be provided with means of ejecting moulded part contained therein and in cooperation with the transfer station eject the part and the injection moulding machine moving half including its slide and means of ejection are eliminated reducing required floor space and cost of the injection moulding machine.

The method may comprises for example moulding n1 numbers of Part1 followed by n2 numbers of Part2 followed by n3 numbers of Part3 and back to n1 numbers of the Part1 and so on wherein which when assembled together make up a Group 1 and the number of tool sets for moulding of the Part1 and the Part2 and the Part3 are so arranged that the production runs in a continuous fashion without the moulding machine waiting for any of the tool sets whilst any of the Part1 Part2 and Part3 are undergoing cooling under application of external force at the holding facility whilst fully contained within tool set it was moulded within, further comprising that the other groups say Group 2 and Group 3 and so on can be moulded in fully flexible manner as demanded of production schedule for example moulding of m1 numbers of Group 1 is followed by moulding of m2 numbers of Group 2 followed by m3 numbers of Group 3 and back to m1 numbers of Group 1 and so on wherein n1, n2, n3, m1, m2 and m3 are positive integers and fully automated production sequence is made possible by computerised scheduling program and automation, furthermore some of the part 1, the part2, the part3, the Group 1, the Group2 and the Group3 and so on may optionally undergo further processing including but not limited to preparing for Overmoulding, trimming, painting, marking, laser inscription, embossing, gluing, assembly and packaging operation and the further processing advantageously is taking place outside the injection moulding machine whilst injection moulding machine continues with moulding operation without any delay. It would be a good example of an overmoulded clear component that the first shot is laser inscribed with part serial number and/or any unique identifier which once overmoulded is encapsulated providing value added information that is tamper proof and protects against possible fraud. This also opens up possibility to for example emboss or coin some design features on surface of first shot and once overmoulded they are encapsulated providing a whole new way of designing and enhancing performance of two shot moulded parts. Another example could be moulding components of an air register louvers for automotive air-conditioning system and all sub components including some overmoulding are produced in sequence such that there is no in process inventory is maintained and desired air registers for example from right, front left, centre right, centre left and so on are produced sequentially eliminating in process inventory and entire car set is produced and packaged together without any cost penalty of such flexible production arrangement.

Some other salient beneficial features of the invention described above are:
Total tooling cost is substantially reduced for example the tool inserts for first shot can be made at low cost by investment casting including cast cooling channels, machined aluminum alloy, and may have very low precision.

The method further comprises the step of providing in the first set or the second set at least one auxiliary melt chamber flowably communicating with the first chamber or the second chamber and the auxiliary melt chamber is fitted with means of applying pressure on the melt contained therein and advantageously fitted with means of application of heat on the melt contained therein comprising steps of:
- During injection of material in the first chamber or the second chamber additional melt is directed to fill the auxiliary chamber,
- once the part is moulded, runner is blocked
- whilst the first kit or the second kit is being transported to the intermediate holding facility additional melt from the auxiliary chamber is forced into the first chamber or the second chamber
- means of application of force and required energy source are advantageously included in the first set or the second set and/or provided by the transport system

This leads to increase in part weight and helps reduce risk of uncontrolled warpage or shrinkage induced vacuum bubbles on the inside of moulded part.

The method may further include a thermoset part and/or combination of thermoplastic and thermoset, wherein the thermoset part is cured by application of heat and thermoplastic part is formed by removal of heat and advantageously produces an overmoulded part that is combination of both the thermoset and the thermoplastic, by way of example the thermoset part is liquid silicone rubber or a vulcanizing rubber and the moulding machine is provided with means of injection of the liquid silicone rubber or placement of vulcanizing rubber preform.

Method of moulding according to any of preceding claims whilst transporting the first kit or the second kit to the intermediate holding facility means of cooling under application of force is activated during transit and means of cooling and application of force is advantageously included in the tool set and/or provided by the transport system.

The first packing stage or the second packing stage according any one of preceding claims are either omitted completely or reduced by 50 % or more advantageously by 90%.

Some other salient beneficial features of the invention described above are:
Total tooling cost is substantially reduced for example the tool inserts for first shot can be made at low cost by investment casting including cast cooling channels, machined aluminum alloy, and may have very low precision.

The method also makes it possible to have varying parting line and line of draw in each moulding as only limitation is overall size of insert and receiving pocket in the tool body. This is a big improvement over traditional injection moulding where the entire tool assembly is opened at its parting line limiting what is possible for multiple parts having varying parting line and line of draw without drastic increase in tool complexity.

Since it is possible to mould only one component at a time despite having a very large tool, the machine tonnage can be reduced and accordingly simple low cost machine is deployed reducing total cost of ownership.

It will be also understood that where the word "comprise", and variations such as "comprises" and "comprising", are used in this specification, unless the context requires otherwise such use is intended to imply the inclusion of a stated feature or features but is not to be taken as excluding the presence of other feature or features.

While the best modes for carrying out the invention have been described in detail, those familiar with the art to which this invention relates will recognize various alternative designs and embodiments for practicing the invention within the scope of the appended claims. It is intended that all matter contained in the above description or shown in the accompanying drawings shall be interpreted as illustrative only and not as limiting.

The reference to any prior art in this specification is not, and should not be taken as, an acknowledgment or any form of suggestion that such prior art forms part of the common general knowledge.

### Brief Description of the Drawings

In order that the invention may be more fully understood there will now be described, by way of example only, preferred embodiments and other elements of the invention with reference to the accompanying drawings, wherein:
Figure 1 shows cross section through first shot moulding, figure 1A a perspective view thereof and figure 1B a top view thereof;
Figure 2 shows details of cooling first shot under pressure by flow of gas at a pressing station. figure 2A a perspective view thereof and figure 2B a top view thereof;
Figure 3 shows details of cooling first shot under pressure by pressing by tool, figure 3A a perspective view thereof and figure 3B a top view thereof;
Figure 4 shows cross section of pressing of first shot in the moulding tool by passage of gas under pressure, figure 4A a perspective view thereof and figure 4B a top view thereof;
Figure 5 shows cross section of pressing of first shot in the moulding tool by passage of gas under pressure that is separated by a flexible membrane, figure 5A a perspective view of the moulding tool, figure 5B a top view thereof and figure 5C a cross section thereof;
Figure 6 shows cross section of pressing of first shot in the moulding tool by passage of gas under pressure that is separated by a flexible membrane and membrane is mounted on a movable piston enabling application of gas in membrane area whilst pressing directly rest of the part by direct actuation by piston, figure 6A shows a perspective view thereof and figure 6B a top view thereof;
Figure 7 shows arrangement of cooling under compression by way of telescopic cores, figure 7A a perspective view thereof and figure 7B a top view thereof;
Figure 8 shows arrangement of segmented and concentric telescopic cores, wherein figure 8A shows a perspective view thereof;
Figure 9 shows features for locking of core to cavity and cross section through overmoulded article, figure 9A shows a perspective view thereof and figure 9B a top view thereof; and
Figure 10 shows an apparatus according to the present invention, particularly a moulding setup, where the moving half of the injection moulding machine is omitted and cooling outside the moulding station is shown at cooling station, which is located next to the moulding machine.

### Description of the Preferred Embodiment and Other Examples of the Invention

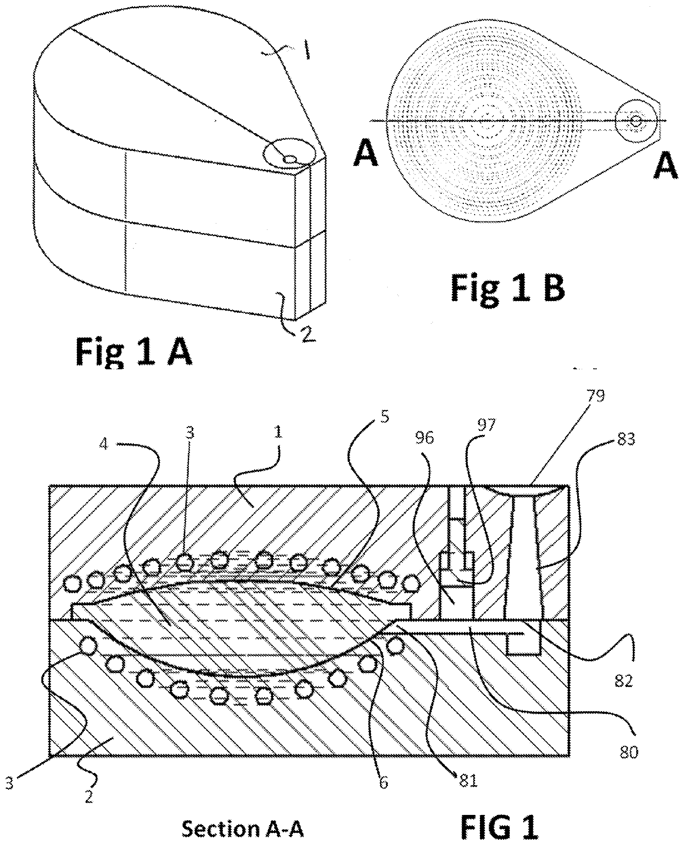

Reference is made to figures 1, 1A and 1B, showing an isometric view, a plan view, a location of section plane and a corresponding section view. Figure 1 shows a first cavity 1, a first core 2 and cross section through basic moulding setup wherein cooling channels 3, moulded article 4 having its shape defined by tool surfaces 5 and 6. Liquefied polymer is injected in the cavity from a machine output at 79, passes through sprue 83 that leads to runner 80 having two ends, one end 81 connects to the part being moulded and another end 82 connects to material coming in. There is also shown an auxiliary melt chamber 96 and means of pushing on the melt contained therein 97. Coolant is passed through the cooling channels 3 and after predetermined cooling time. The core is pulled away from the cavity. Now the solidified moulded part can be ejected along with the sprue and runner. The runner 80 and the sprue 83 are discarded for example by use of automatic cutting device not shown that may be integrated in the tool.

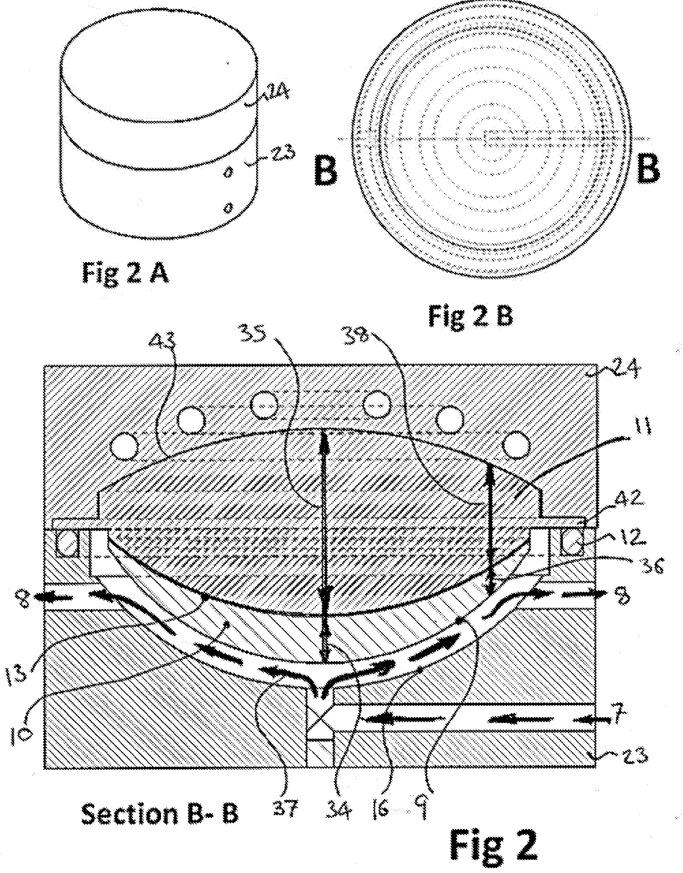

Reference is made to figures 2, 2A and 2B showing an isometric view, a plan view, a location of a section plane and a corresponding section view. Figure 2 shows a moulded first shot part being cooled in a cooling station defined by two halves 23 and 24. Initially the moulded article has a volume equal to combined volume 10 and 11, wherein reference numeral 10 is a visualisation of reduction in volume of the moulded part at the end of cooling and reference numeral 11 is volume of the moulded part at end of cooling. The gas, typically nitrogen, is compressed to pressure as high as 300 bar or more and chilled to low as -50°C. As it passes over the part surface it removes heat from it solidifying it. On cooling the moulded article shrinks to the volume 11 and the volume reduction is shown as an indicative visualisation purpose only by volume 10. It is specifically noted here that shrinkage 34 in thickest portion having end of cooling maximum thickness 35 is higher than that at shrinkage near the edges 36, where end of cooling thickness 38 is substantially less compared to thickness at 35. Entry of chilled inert gas under pressure is from 7 and its passage over the moulded part shown by arrows 37 and it exits through 8 via pressure regulator (not shown) that ensures predetermined back pressure as the gas flows out cooling and pressing on the part and pushing inwards the first surface 3 from starting position 9. Seal 12 prevents loss of pressure and leak of gas. A portion of moulding 11 has a portion 42 surrounding entire extremities of the component that seals off against seal 12 preventing the gas under pressure going to other face 43 of the component. In case of very thick parts and very short cooling time before transferring the part to the cooling station the part has substantial amount of liquid polymer inside with thin skin akin to a gel capsule and advantageously the arrangement for cooling is reversed, wherein refernce24 is at bottom and 23 is on top such that part is free to rest on surface 43 against gravity when transferred into the tool half 24 and during pressing the part is supported against gravity and the forces of compression by surface 43 and force is applied gradually so as not to deform and rupture the skin abruptly.

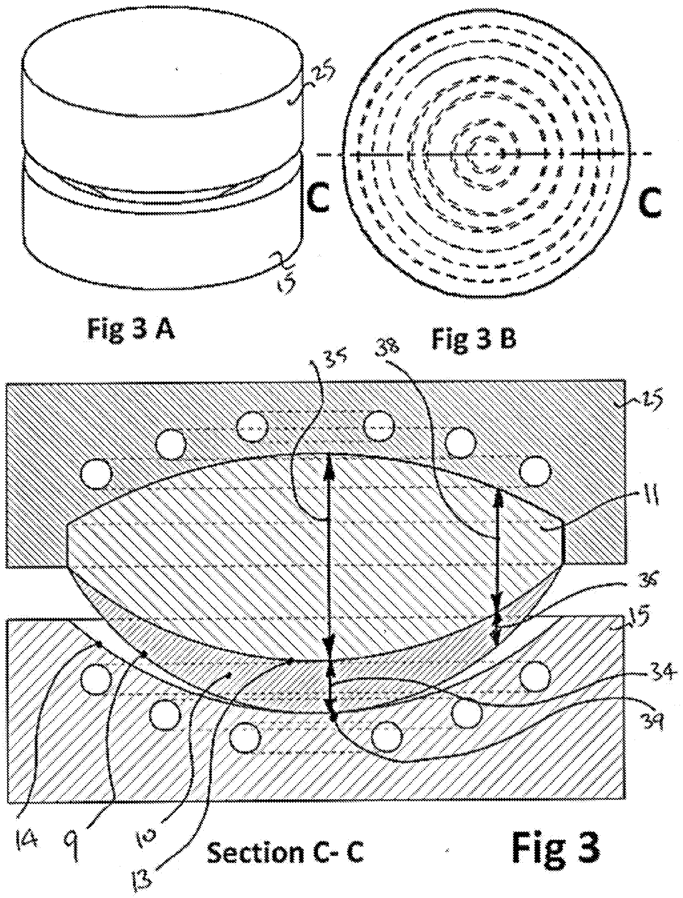

Reference is made to figures 3,3A and 3B, showing an isometric view, a plan view, a location of section plane and a corresponding section view. Figure shows means of mechanical pressing an article 11, a cavity 25 and a core 15. Initially the moulded article has a volume equal to the combined volume 10, which is a visualisation of a reduction in volume at the end of cooling and 11 which is volume at end of cooling core 15 is pushed under controlled pressure towards the other half 25 and reduction in volume is visualised by 10. It is specifically noted here that shrinkage 34 in thickest portion 35 is more compared to shrinkage near the edges 36, where thickness 38 is substantially less compared to thickness at 35. It should be understood here that as the core 15 is moved towards support tool 25 initially in contact with the moulded first part that has to be visualised as combined 11 and 10 as one piece and contact is made only at the thickest portion 39. As the pressing movement continues in a time and/or force controlled manner it adaptively spreads contact area, where force is applied on the first part towards areas having lesser thickness and at end of travel the initial profile 9 of first part is changed to 13 and at that time the core 15 has substantially full contact and the profile 14 and profile 13 are almost identical. This is key difference compared to many prior art executions, where pressing tool has full contact with part being pressed to begin with and cannot compensate for extra shrinkage in thickest part and in effect would lose contact with the part as extra shrinkage continues in thickest portion of the part or apply excessive load into thinnest part that would have solidified way before the thickest portion and essentially damage the thinnest part in process of application of continued load. In case of a very thick part and very short cooling time before transferring the part to the cooling station the part has substantial amount of liquid polymer inside with thin skin akin to a gel capsule and advantageously the arrangement for cooling is reversed wherein 25 is at bottom and 15 is on top such that part is free to rest inside tool 25 against gravity when transferred into the tool half 25 and during pressing the part is supported against gravity and the forces of compression by surface 14 of core 15 is applied gradually so as not to deform and rupture the skin abruptly.

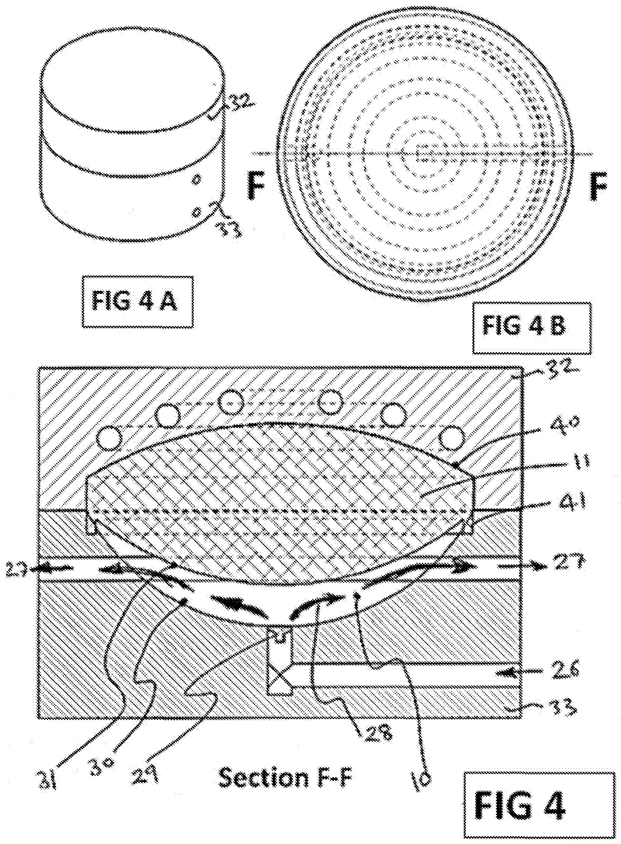

Reference is made to figures 4, 4A and 4B section f-f, wherein said figures show an isometric view, a plan view, a location of a section plane and a corresponding section view. Figure 4 shows a first set made up of a core 33 and a cavity 32. Advantageously the tool assembly is mounted in a vertical moulding machine having cavity 32 at the bottom and core 33 on top. As the moulded part 11 starts to solidify its volume decreases and a small gap starts to open up at tool surface 30. Through a non-return valve 29 high pressure gas is introduced that spreads across the surface of the part 11 as shown by arrows 28. As shrinkage increases the entire volume left behind 10 by shrinking part 11 is occupied by gas under pressure that continues to isostatically press on entire surface 31 thus improving part density and its uniformity and reduce possibility of internal voids that may form on solidification without external pressure. Cooling efficiency is further improved by allowing gas to flow across part surface 31 and escape through openings 27, generally along portion of part having lowest thickness, through a pressure regulating valve such that flow and pressure both are maintained. The flow of gas in such a case is chilled to very low temperature, typically inert gas for example Nitrogen at -30°C. Pressure of gas is decided by force required to overcome shrinkage induced internal voids and typically is of the order of 50 bar. However, in yet another embodiment of the invention the pressure may be increased to as high as 300 to 900 bar raising glass transition temperature of polymer out which part 11 was moulded leading to compression induced solidification. That leads to part solidification at higher temperature yet producing part having minimum stress that is normally produced by process of solidification. The gas under pressure is prevented from flowing across to other face of the part 40 by means of feature 41 moulded in the part that acts as a seal. This part may be now transferred to over moulding tool as applicable.

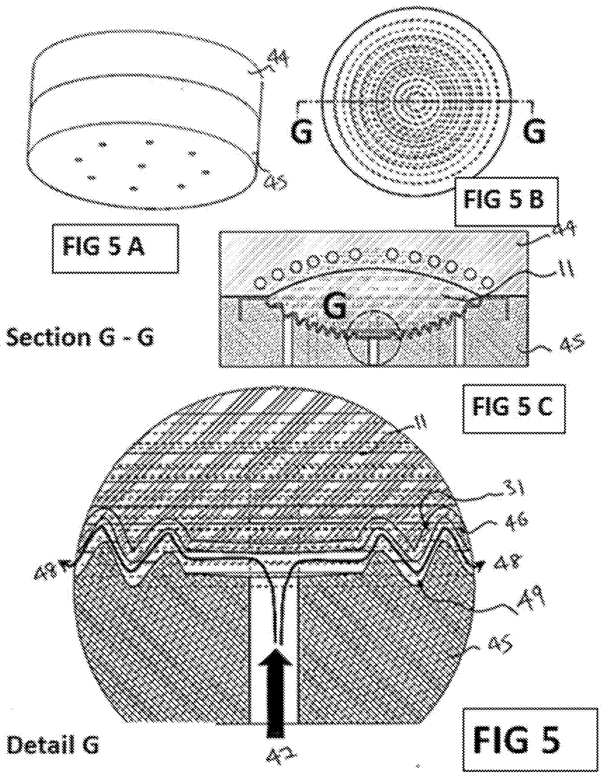

Reference is made to figures 5, 5A, 5B and 5C, showing an isometric view, a plan view, a location of section plane and a corresponding section view and an enlargement detail G. Figure 5 shows a first set made up of a cavity 44 and a core 45, where in the surface 31 of part 11 is separated from the core 45 by a flexible membrane 46 which in a simplistic form is shaped like a bellow made of thin metal. As the moulding starts to shrink a tiny gap that initially develops adjacent to the bellow. Pressure is applied into space defined by surface 49 of the core 45 and underside of the bellow 46 and application of pressure is by a heat exchange fluid supplied through 42 and the same exits through 48, which may be via a counterbalance valve, a pressure regulator or any such device that ensures there is predetermined pressure applied on part surface 31 via flexing of the said bellow. As volumetric shrinkage increases more the bellow presses against the moulded part surface increasing the gap as referred above and extra space is occupied by the heat exchange fluid similar to expanding balloon. Key advantage of this setup is that the part surface is separated by the membrane that helps to overcome potential contamination of surface and advantageously the heat exchange fluid is high pressure Nitrogen that has been dried and chilled and it takes away heat from the part very efficiently. It is also possible now to apply pressure by high pressure air or hydraulic pressure as there is no risk of contact with the part surface simplifying and potentially reducing costs. This enables cooling of the moulded article under pressure. It has to be noted that the moulding surface will carry impression of the shape and texture of the bellow which may not be acceptable in some instances and it is conceivable that this part may be overmoulded in another setup covering at least the side that was pressed by the bellow during its moulding cycle. It has to be noted that this mode of cooling is applied either in the moulding tool or external cooling arrangement. Advantageously safety interlocks are built in the tool and application of pressure is interlocked to presence of required pressure, temperature and dispensation of shot weight by the injection moulding machine in the chamber such that unintended activation of pressure in empty or partially filled chamber is avoided protecting against damage.

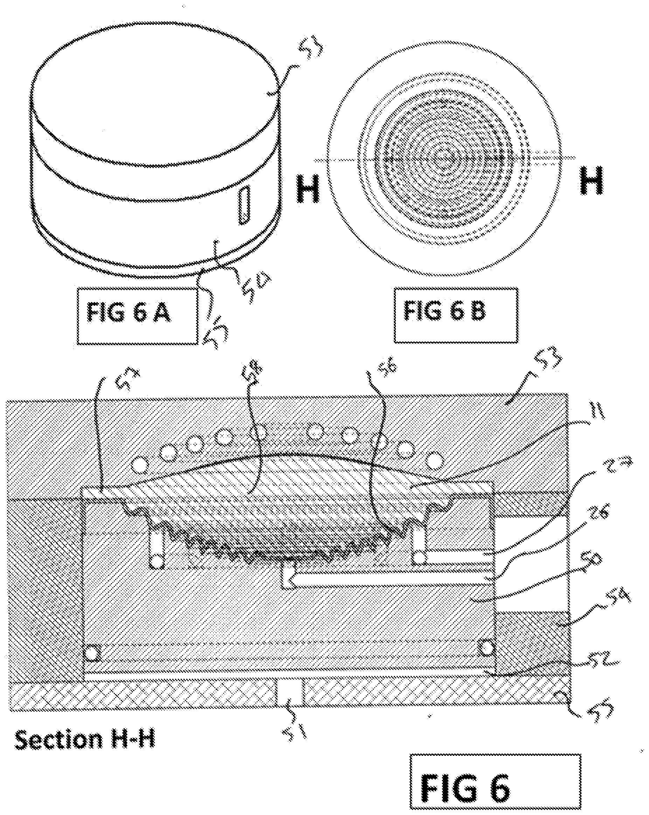

Reference is made to figure 6, showing an isometric view, a plan view, a location of section plane and a corresponding section view. A similar setup as described by figure 5 with addition of a hydraulic piston 50 on which bellow 56 is mounted is shown by figure 6. The piston has internal passages that enable application of pressure on the underside of the bellow 56 which in turn presses on the surface of part 11. First set made up of cavity 53 and core 54 where core 54 in non-limiting aspect also acts as integrated hydraulic cylinder outer body containing piston 50. In this instance the moulded article has two distinct zones made up of flange area 57 and bulbous area 58 in the middle. In this configuration the piston is advanced advantageously but not limited to be application of hydraulic pressure applying pressure over entire part surface and compensation for additional local shrinkage in the bulbous area is achieved maintaining cooling under application of load for part having varying thickness and ensuring the part is not allowed to develop internal bubbles or shrinkage induced vacuum bubbles advantageously producing part having uniform density. The heat removal fluid by way of example is high pressure chilled water, or high pressure chilled nitrogen enters in the tool close to the bulbous thick area 58 via opening at 26 and exits after flowing over the surface of bellow and exits via opening 27. Required pressure is maintained by controlling exit of the heat exchange fluid via a counterbalance valve, a pressure regulator or any such device that ensures there is predetermined pressure applied on part surface 31 via flexing of the said bellow. It has to be noted that this mode of cooling is applied either in the moulding tool or external cooling arrangement. Advantageously safety interlocks are built in the tool and application of pressure is interlocked to presence of required pressure, temperature and dispensation of shot weight by the injection moulding machine in the chamber such that unintended activation of pressure in empty or partially filled chamber is avoided protecting against damage.

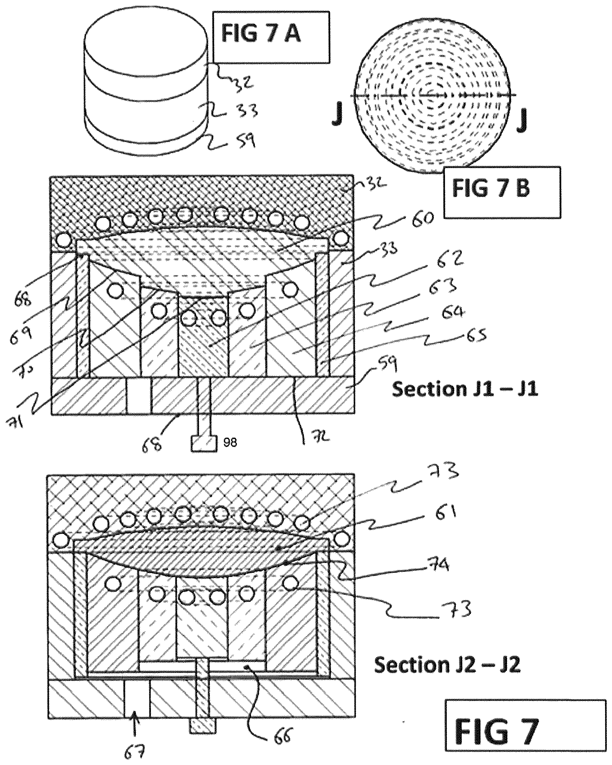

Reference is made to figure 7, showing an isometric view, a plan view, a location of section plane and a corresponding section view. There are two timed section views, one at beginning of cooling and another at end of cooling. An arrangement for cooling under application of force is shown, wherein force is applied by however not limited to plurality of cylindrical cores 62, 63, 64, 65 slidable telescoping within each other and outer core housing 33. A lens in precompression as initially moulded shape and size 60 is moulded in a chamber defined by the cavity 32 and the combination of cores 62, 63, 64, 65. The cores are provided by mechanical support to at 72 taking up injection moulding load and when resting on the face 72 the top surfaces of the cores 68, 69, 70, 71 define surface of the moulded lens on the core side. Advantageously the cores and cavity carry means of heat exchange in simple form a cooling duct 73 close to moulding surface through which cooling medium is passed. After a predetermined time cooling is continued under application of load by advancing the cores in simple case by application of hydraulic load via port 67 applying pressure in chamber 66 compressing on corresponding surface of the moulded lens. For simplicity any sealing against hydraulic fluid leaking is not shown. Maximum travel during advance is controlled by a travel stop 98 that abuts to face 68 of the end plate 59 when fully advanced, for simplicity shown only on the core 70, however fixed to all moving cores. For simplicity hydraulic seals and other means of advancement of cores are not shown. Top ends of the cores forming the lens surface are shaped specifically that when fully advanced form a smooth surface 74, which is also final shape of the lens 61 when fully compressed and solidified. It is also intent of the invention to be able to easily adjust volume of lens 60 by means of relative movement and positioning of end stops at 72 and 68 for each of the cores individually such that desired ratio is maintained between the volume as injected lens 60 and final volume of lens 61. This ratio has in many cases to be worked out by trial and easy adjustment makes it possible to get ideal process parameters without excessive cost of new cores producing part having uniform density that is free of voids and other defects in a very fast production cycle. Whilst the concept is shown with cylindrical cores for a spherical lens it will be easily applicable to aspheric lenses as well. Whilst mentioned above the application of hydraulic load is acting on all the cores simultaneously, it is to be understood that separate individual control on each is possible by means including but not limited to use of servo electric motors, cam activation to name a few.

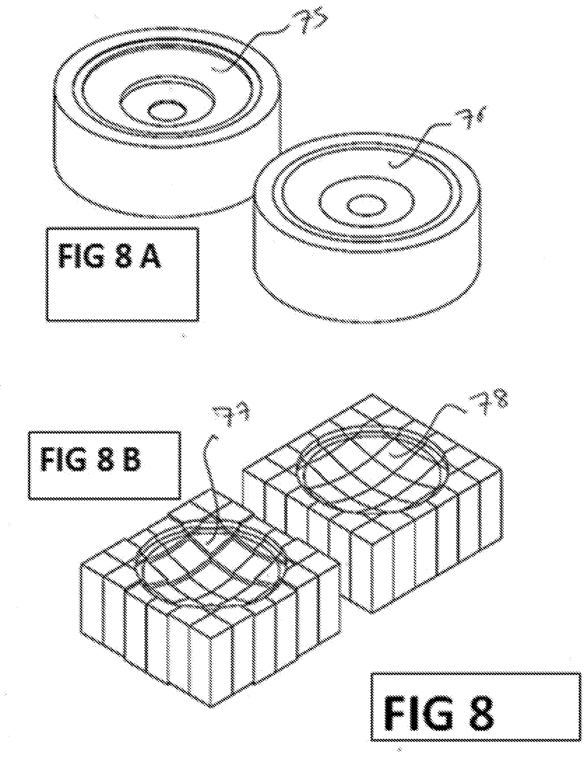

Reference is made to figure 8, and 8A, elaborating on a method described by way of figure 7 showing an isometric view, of two alternate embodiments of telescopic cores described above, only on core side of the tool for simplicity. Fig. 8A shows retracted condition of concentric generally cylindrical cores 75 as ready for moulding of the first part and 76 shows end of cooling under force where they generally line up defining smooth profile for end of cooling stage of the first part. Similarly at figure 8 a plurality of cores slidably grouped together 77, are shows ready for moulding condition of the first part and 78 at end of cooling under force where again they line up to define smooth profile for end of cooling stage. Obvious benefit of the second execution according to figure 8 are that when the part is not simple shaped like a solid of revolution and may have extra thickness in a specific position and corresponding insert's initial position and travel can be independently controlled providing more control for every zone of the part. For simplicity other components of assembly are not shown.

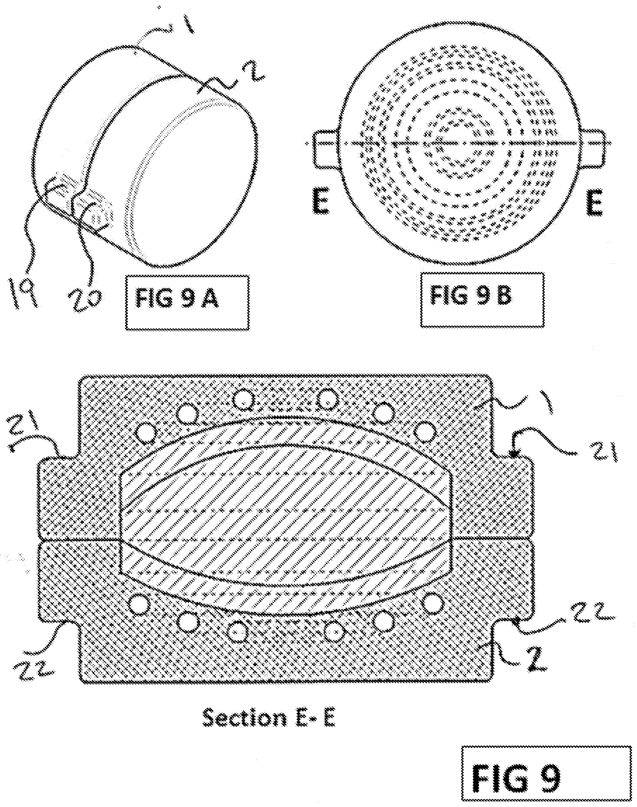

Reference is made to figure 9, 9A and 9B, showing an isometric view, a plan view, a location of section plane and a corresponding section view. Figure 9 shows tool halves 1, 2, having simplistic non-limiting embodiment by way of provision of locking tabs 19, 20. In a non-limiting case the locking mechanism (not shown) engages on faces 21 and 22 locking the two halves. In section E-E a schematic of moulded first part 11 being overmoulded on both sides with second part 17, 18 is shown. There is provision made in the tool and on the first part (not shown) to locate the first part 11 in predetermined position prior to moulding in the second part such that desired gap is maintained as applicable to provide controlled thickness for second part 17, 18. Advantageously the first part initial shape is so configured that at end of cooling under force and associate larger shrinkage in thickest portion of the first part results in generally uniform thickness of the second part improving accuracy of the moulded first part.

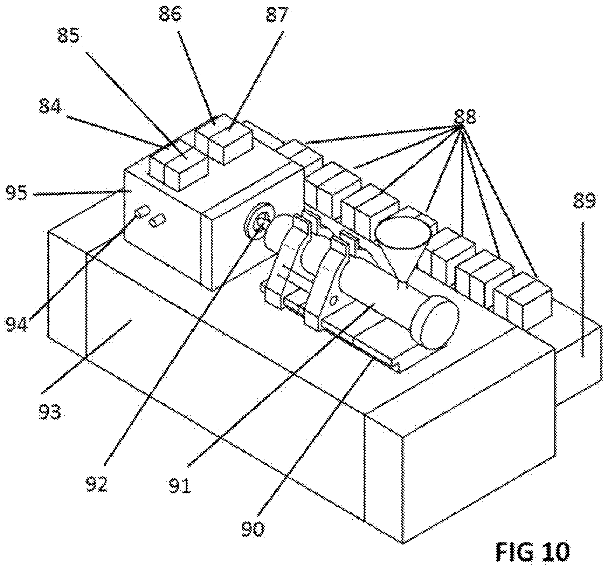

Reference is made to figure 10 showing a moulding setup consisting of a mounting frame 93, on which is mounted injection unit in schematic form made up of slide 90 on which is mounted a barrel 91 that produces liquefied melt, having nozzle 92 from where the melt is delivered into the tool 95, generally through hot runner (not shown). From here the melt is delivered into the tool cavities via a runner. The tool has chambers that receives tool sets, namely a first set, made up of a first core 84 and a first cavity 85, a second set made up of second core 86 and a second cavity 87 and melt is directed to either of them in controlled fashion. It should be understood that when more than one material is required or more throughput rate is required than possible by a single barrel, additional barrels may be mounted on to the frame and melt directed through appropriate hot runner valve gates that may be built into tool body. Inserts are removable from the tool body as sets and are held in place in precise location and connected by quick clamp mechanism, symbolically shown at 94. The sets contain means of blocking runner (not shown) and clamping to each other (not shown). Once melt is directed inside a Set, the runner is blocked, set clamped and the set is released from the tool and in clamped condition moved to cooling station 89, that has location to receive numerous sets 88 that may be of different types capable of moulding different parts including overmoulding some. The cooling station has means to connect cooling supply and pressure depending on mode of cooling under pressure defined for a given set and the connections are advantageously made by means of quick connect coupling and process of cooling under pressure is carried out automatically.

The sets may be mounted with RFID sensors that provide information to computerised control system as to what stage of the process a given set is and what cooling and/or heating needs to be applied on the set.

It should be noted here that the frame forms basis of a novel machine where the cost is drastically reduced by eliminating ejection side/ moving side of an injection moulding machine is eliminated and means of ejection are built into the sets. That leads to vast reduction in cost of the machine and also the floor space required.

## Claims

1. A method for moulding of a thermoplastic article comprising the steps of:
- Injection moulding at a first moulding station, in which is mounted a first moulding tool (1, 2) assembly comprising at least its shape defining elements comprising a first core (2) and a first cavity (1), which define two opposing surfaces (5, 6) of a first part to be moulded and when fully closed define at a parting surface a first chamber (5, 6) enclosing a fixed first volume separable, said first moulding tool assembly having internal means of heat removal (3) and further comprise a first runner (80) flowably communicating between the chamber and injection moulding machine melt passage (83),
- Closing the first core (2, 84), the first cavity (1, 85), the first runner (80) and means of blocking making up a first set and for the process of moulding wherein after closing the first core (2, 84) and the first cavity (1, 85) the first part is moulded by injecting pliable polymer first resin via the first runner (80) in the first chamber till it is completely filled as per predetermined first process parameters,
- Cooling by a first cooling step by passage of cooling medium through the internal means of heat removal (3),
- Introduction of additional material into the first chamber (5, 6) flowing via the first runner (80) under second process parameters, differing form the first process parameters,
- Blocking the first runner (80) after introducing the additional material,
- Subsequent to blocking of the first runner (80) further cooling by a second cooling to solidification by combining cooling with application of external force in a cooling station (89), wherein application of the external force deforms adaptively at least one surface of the first part and wherein the process of second cooling is carried out distal from the moulding station.

2. Method according to claim 1, comprising steps of:
Overmoulding the first part at a second moulding station, which may be part of a second moulding machine, said second molding station comprising a second moulding tool assembly comprising shape defining elements that, when fully closed define a second chamber enclosing a fixed second volume separable at its parting line where from the overmoulded second part can be removed, said second moulding tool assembly (23, 24) having internal means of heat removal (7, 8) and further comprising second runner flowably communicating between the second chamber and the moulding machine melt passage second melt passage, wherein the second core, the second cavity, the second runner and means of blocking make up the second set and for the process of producing overmoulded second part; further comprising the steps of
- Positioning the first part in a predefined position inside the space defined by the second core or the second cavity after closing the second core and the second cavity the
- Injecting pliable polymer resin second resin via the second runner in the second chamber either on one or both sides of the first part contained within till it is completely filled as per predetermined third process parameters differing from the first and/or second process parameters and cooling by a third cooling is continued by passage of cooling medium through the internal means of heat removal (7, 8),
- Introduction of additional material into the second chamber flowing via the second runner under fourth process parameters differing from the first, second, third and/or fourth process parameters, and
- Blocking the second runner immediately after end of a second packing stage,
- Cooling by a fourth cooling under application of external load by passage of cooling medium through the internal means (7, 8) of heat removal.

3. The method according to any one of claims 1 or 2, wherein the process of second cooling or the fourth cooling is carried out distal from the moulding machine comprising steps of:
- Locking the first set (88) and/or the second set (88) whilst on respective moulding station,
- Releasing them from respective moulding tool assembly,
- Transferring a subassembly as a first kit made up of the first set (88) and the first part (11) contained therein and/or a second kit made up of the second set (88) and the overmoulded second part (17, 18) contained therein to an intermediate holding facility, comprising means of heat exchange fluid supply and optionally recirculation get connected to internal means of heat transfer in the first set and/or the second set ensuring that the first part (11) or the second part (17, 18) is never exposed to outside atmosphere till end of the second cooling or the fourth cooling which is occurring outside respective moulding station
whilst the first part (11) and/or the overmoulded second part (17, 18) are cooling the moulding machine continues to mould yet another the first part or the overmoulded second part (17, 18) or a third part independent of the first part (11) or the overmoulded second part (17, 18) each having its own unique processing parameters improving productivity of the moulding machine.

4. Method according to claim 3, wherein the cooling under application of external force is carried out inside tool inserts so configured that they form a sealed gas tight volume between the first surface and corresponding face of the tool insert when closed, wherein a small gap first gap is developed as the first part starts to shrink on solidification and uniform force on substantially entirety of the first surface is applied by application of high pressure gas advantageously combined with cooling by flowing low temperature gas (7, 8) so configured that it flows over entire the first surface (10) and exits in a controlled manner via a back pressure mechanism.

5. Method according to any one of the preceding claims, wherein cooling under application of external force is carried out in tool inserts configured with having an elastically first flexing membrane (46) having a first and second opposing face fixed to a corresponding side of the at least one of the first core (45), the first cavity, the second core, the second cavity, making hermetically tight connection at its periphery defining a closed space therein, wherein the first opposing face is advantageously in full contact with say the first surface and fluidic pressure is applied on the second opposing face and the first flexing membrane continues to deform on application of the pressure transmitting force on to the first surface advantageously application of force is combined with passing heat exchange fluid under pressure having entry and exit points so configured that it is directed to flow substantially over entire second opposing face, whilst maintaining pressure thus providing cooling of the first part under force.

6. Method according to any one of the preceding claims, wherein the first part (11) and/or the overmoulded second part comprise a central generally bulbous area surrounded by planar thick area at its periphery and wherein the first flexing membrane is mounted on a movable piston (50) contacting the bulbous area and piston having two ends, first end in contact with the planar thick area and another end connected to means of actuation of the piston, the piston is integrated within corresponding side of at least one of the first core (54), the first cavity (53), the second core, the second cavity and cooling under application of external force is carried out by advancing the piston applying force on the planar thick area and the first flexing membrane provides flexible contact with the bulbous area maintaining force as its size and shape is changing relative to the planar flat area as it solidifies and by way of example only piston is advanced by application of hydraulic pressure and application of force to first flexing membrane is by way of example only application of hydraulic or pneumatic pressure advantageously the piston is provided with internal means of heat exchange through which heat exchange medium is circulated and advancement of piston and application of force to the first flexing membrane is either sequential or simultaneously and pressure exerted on to the first part by the piston and by the first flexing membrane is independently controlled improving upon compression injection moulding process reducing stress in moulded article.

7. Method according to any one of the preceding claims, wherein the second cooling and/or fourth cooling under application of force is carried out comprising at least one of the following steps:
- Moulding the first part (60) in the first chamber having a first volume, wherein either the first core and/or the first cavity are provided with independently movable set of inserts (62, 63, 64, 65, ) having internal means of heat removal (73) made up of at least a first insert having a first and a second end and a second insert having a first and second end, wherein the first end (71) of the first insert (62) and the first end (70) of the second insert (63) make up part of the moulding surface and the second end of the first insert (62) and the second end of the second insert (63), when furthest removed from it have adjustable travel stops (67'), wherein the first insert (62) and the second insert (63) have only one degree of freedom allowing sliding motion relative to each other and to the first core and/or the first cavity that can be connected to independent means of actuation (67), and
- Activation of independently controlled actuators (67) either integrated in or connected to the second end of the first insert (62) and the second end of the second insert (63) moving them outwards simultaneously or in a programmed sequence or combined with pulsing them axially in direction of travel.

8. Method according to claim 7, wherein the travel of the first insert (62) and the second insert (63) continues until it reaches its individual travel stops (67') so configured that at end of travel the first chamber volume is reduced to second volume which closely matches that of the first part (60) when fully solidified and the first end of the first insert and the first end of the second insert generally coincide with final shape of solidified the first part (60) when cooled to predetermined ejection temperature producing the first part or the overmoulded second part having uniform density and free of internal voids and minimal stress.

9. Method of any one of the preceding claims comprising steps at least one of the following steps:
- After predetermined time at the intermediate holding facility transferring the second kit to a transfer station (swap) maintained under controlled atmosphere of positive pressure high purity inert gas where the second part contained within is ejected, and the empty set is returned back to holding facility, where it is advantageously preheated, and/or
- After predetermined time at the intermediate holding facility transferring the first kit and an empty preheated second set (88) to the transfer station, where the first part contained within first set is transferred to the second set (88) and the empty first set is returned back to holding facility where it is advantageously preheated, and/or
- After locking the second set (88) containing the first part transferring the second set to the second moulding station, where the first part is overmoulded and wherein the second moulding station may be the same as the first moulding station and, the second moulding tool and the first moulding tool are the same and are capable of receiving the first set (88) and the second set (88) and the second injection moulding machine and the first injection moulding machine are the same and has provision to carry out injection moulding with parameters defined uniquely for each of the moulding operations and the first resin and the second resin are same, and/or
- Controlling the entire process of kit transfer, cooling, part transfer and injection moulding by a computerised control identifying the first kit and the second kit with associated process data for example by RFID chip mounted on each kit, and/or
- Advantageously at least a portion of the first surface and/or the second surface that is to be bonded permanently with the second part is heated or activated, and/or
- The first moulding tool and/or the second moulding tool may consist of sub cavities configured for multiple first parts and/or second parts.

10. Method according to any one of the preceding claims, wherein moulding tool assembly is provided with means of ejecting the moulded part contained therein and in cooperation with the transfer station (swap) ejecting the part and the injection moulding machine moving half including its slide and means of ejection are eliminated reducing required floor space and cost of the injection moulding machine.

11. Method according to any one of preceding claims, comprising the following steps
- moulding n1 first parts,
- molding n2 second parts,
- molding n3 third parts,
- wherein the n1 first parts, the n2 second parts and the n3 third parts make up a first component and the number of tool sets for moulding of the first part and the second part and the third part are so arranged that the production runs in a continuous fashion without the moulding machine waiting for any of the tool sets whilst any of the first part, the second part and the third part are undergoing cooling under application of external force at the holding facility whilst fully contained within tool set it was moulded within, further comprising that the other components and so on can be moulded in fully flexible manner as demanded of production schedule, moulding of m1 components is followed by moulding of m2 second components and followed by m3 third components, wherein a fully automated production sequence is made possible by computerised scheduling program and automation, furthermore some of the first part, the second part, the third part, the first component, the second component and the third component and so on may optionally undergo further processing including to preparing for overmoulding, trimming, painting, marking, laser inscription, embossing, gluing, assembly and packaging operation and the further processing advantageously is taking place outside the injection moulding machine whilst injection moulding machine continues with moulding operation without any delay.

12. Method of moulding according to any of preceding claims, wherein providing in the first set (1, 2) or the second set at least one auxiliary melt chamber (96) flowably communicating with the first chamber or the second chamber and the auxiliary melt chamber (96) is fitted with means of applying pressure on the melt contained therein and fitted with means of application of heat on the melt contained therein comprising steps of:
- During injection of material in the first chamber or the second chamber additional melt is directed to fill the auxiliary chamber,
- Blocking the runner (80), when the part is moulded,
- whilst the first kit or the second kit is being transported to the intermediate holding facility additional melt from the auxiliary chamber (96) is forced into the first chamber or the second chamber,
- Increasing part weight and reducing risk of uncontrolled warpage or shrinkage induced vacuum bubbles on the inside of moulded part
- wherein means of application of force (97) and required energy source are included in the first set (1, 2) or the second set and/or provided by the transport system.

13. Method of moulding according to any of preceding claims, said method comprising a thermoset part and/or combination of thermoplastic and thermoset, wherein the thermoset part is cured by application of heat and thermoplastic part is formed by removal of heat and advantageously produces an overmoulded part that is combination of both the thermoset and the thermoplastic, by way of example the thermoset part is liquid silicone rubber or a vulcanizing rubber and the moulding machine is provided with means of injection of the liquid silicone rubber or placement of vulcanizing rubber preform.

14. Method of moulding according to any of preceding claims whilst transporting the first kit or the second kit to the intermediate holding facility means of cooling under application of force is activated during transit and means of cooling (3) and application of force is advantageously included in the tool set (1, 2) and/or provided by the transport system.

15. Method of moulding according to any of preceding claims, wherein the first packing stage or the second packing stage are either omitted completely or reduced by 50 % or more preferred by 90%.

## Patentansprüche

1. Verfahren zum Gussformen eines thermoplastischen Gegenstandes, das die folgenden Schritte umfasst:
- Spritzgießen in einer ersten Formstation, in der eine erste Formwerkzeuganordnung (1, 2) montiert ist, die zumindest ihre formdefinierenden Elemente umfasst, die einen ersten Kern (2) und einen ersten Hohlraum (1) umfassen, die zwei gegenüberliegende Oberflächen (5, 6) eines ersten zu formenden Teils definieren und, wenn sie vollständig geschlossen sind, an einer Trennfläche eine erste Kammer (5, 6) umschließen, die ein festes, abtrennbares erstes Volumen einschließt, wobei die erste Formwerkzeuganordnung interne Mittel zur Wärmeabfuhr (3) aufweist und ferner einen ersten Angusskanal (80) umfasst, der fließend zwischen der Kammer und dem Schmelzkanal (83) der Spritzgießmaschine in Verbindung steht,
- Schließen des ersten Kerns (2, 84), des ersten Hohlraums (1, 85), des ersten Angusskanals (80) und der Mittel zum Blockieren, die einen ersten Satz bilden, und für den Prozess des Formens, wobei nach dem Schließen des ersten Kerns (2, 84) und des ersten Hohlraums (1, 85) das erste Teil durch Einspritzen eines ersten biegsamen Polymerharzes über den ersten Angusskanal (80) in die erste Kammer geformt wird, bis sie gemäß vorbestimmter erster Prozessparameter vollständig gefüllt ist,
- Abkühlung durch einen ersten Abkühlungsschritt durch Durchleiten von Kühlmedium durch das interne Mittel zur Wärmeabfuhr (3),
- Einbringen von zusätzlichem Material in die erste Kammer (5, 6), das über den ersten Kanal (80) fließt, unter zweiten Prozessparametern, die sich von den ersten Prozessparametern unterscheiden,
- Blockieren des ersten Kanals (80) nach dem Einbringen des zusätzlichen Materials,
- Nach dem Blockieren des ersten Kanals (80) weitere Abkühlung durch eine zweite Abkühlung bis zur Erstarrung durch Kombinieren der Abkühlung mit der Anwendung einer äußeren Kraft in einer Kühlstation (89), wobei die Anwendung der äußeren Kraft zumindest eine Oberfläche des ersten Teils adaptiv verformt und wobei der Prozess der zweiten Abkühlung entfernt von der Formstation durchgeführt wird.

2. Verfahren nach Anspruch 1, umfassend die folgenden Schritte:
Überformen des ersten Teils in einer zweiten Formstation, die Teil einer zweiten Formmaschine sein kann, wobei die zweite Formstation eine zweite Formwerkzeuganordnung umfasst, die formdefinierende Elemente umfasst, die, wenn sie vollständig geschlossen sind, eine zweite Kammer umfassen, die ein festes zweites Volumen einschließt, das an seiner Trennlinie abtrennbar ist, aus der das überformte zweite Teil entnommen werden kann, wobei die zweite Formwerkzeuganordnung (23, 24) interne Mittel zur Wärmeabfuhr (7, 8) aufweist und ferner einen zweiten Angusskanal umfasst, der fließend zwischen der zweiten Kammer und dem Schmelzedurchgang der Formmaschine, dem zweiten Schmelzedurchgang, in Verbindung steht, wobei der zweite Kern, der zweite Hohlraum, der zweite Angusskanal und die Mittel zum Blockieren den zweiten Satz bilden und für den Prozess der Herstellung des überformten zweiten Teils; ferner umfassend die folgenden Schritte
- Positionieren des ersten Teils in einer vordefinierten Position innerhalb des durch den zweiten Kern oder den zweiten Hohlraum definierten Raums nach dem Schließen des zweiten Kerns und des zweiten Hohlraums;
- Einspritzen von biegsamem zweitem Polymerharz über den zweiten Kanal in die zweite Kammer entweder auf einer oder auf beiden Seiten des darin enthaltenen ersten Teils, bis es gemäß vorbestimmter dritter Prozessparameter, die sich von den ersten und/oder zweiten Prozessparametern unterscheiden, vollständig gefüllt ist und die Kühlung durch eine dritte Kühlung fortgesetzt wird, indem Kühlmedium durch die internen Mittel zur Wärmeabfuhr (7, 8) geleitet wird,
- Einbringen von zusätzlichem Material in die zweite Kammer, das über den zweiten Kanal strömt, unter vierten Prozessparametern, die sich von den ersten, zweiten, dritten und/oder vierten Prozessparametern unterscheiden, und
- Absperren des zweiten Kanals unmittelbar nach Ende einer zweiten Packungsstufe,
- Kühlung durch eine vierte Kühlung unter Aufbringung einer externen Last durch Durchleiten von Kühlmedium durch die internen Mittel (7, 8) zur Wärmeabfuhr.

3. Verfahren nach einem der Ansprüche 1 oder 2, wobei der Prozess der zweiten Kühlung oder der vierten Kühlung entfernt von der Formmaschine durchgeführt wird und folgende Schritte umfasst:
- Verriegeln des ersten Satzes (88) und/oder des zweiten Satzes (88), während sie sich auf der jeweiligen Formstation befinden,
- Freigeben von der jeweiligen Formwerkzeuganordnung,
- Übergabe einer Unterbaugruppe als erster Verbund, der aus dem ersten Satz (88) und dem darin enthaltenen ersten Teil (11) besteht, und/oder als zweiter Verbund, der aus dem zweiten Satz (88) und dem darin enthaltenen umgespritzten zweiten Teil (17, 18) besteht, an eine Zwischenlagereinrichtung, die Mittel zur Zufuhr von Wärmeaustauschflüssigkeit und optional Rezirkulation umfasst, die mit internen Mitteln zur Wärmeübertragung in dem ersten Satz und/oder dem zweiten Satz verbunden werden, um sicherzustellen, dass das erste Teil (11) oder das zweite Teil (17, 18) bis zum Ende der zweiten Kühlung oder der vierten Kühlung, die außerhalb der jeweiligen Formstation stattfindet, niemals der Außenatmosphäre bestrahlt wird;
während das erste Teil (11) und/oder das umspritzte zweite Teil (17, 18) abkühlt, fährt die Formmaschine fort, ein weiteres erstes Teil oder das umspritzte zweite Teil (17, 18) oder ein drittes Teil unabhängig von dem ersten Teil (11) oder dem umspritzten zweiten Teil (17, 18) zu formen, wobei jedes seine eigenen einzigartigen Verarbeitungsparameter hat, was die Produktivität der Formmaschine verbessert.

4. Verfahren nach Anspruch 3, wobei die Abkühlung unter Anwendung äußerer Kraft innerhalb von Werkzeugeinsätzen erfolgt, die so ausgestaltet sind, dass sie ein abgedichtetes, gasdichtes Volumen zwischen der ersten Oberfläche und der zugeordneten Fläche des Werkzeugeinsatzes ausbilden, wenn sie geschlossen sind, wobei ein kleiner erster Spalt entsteht, wenn das erste Teil bei der Verfestigung zu schrumpfen beginnt, und eine gleichmäßige Kraft auf im Wesentlichen die gesamte erste Oberfläche durch Anwendung von Hochdruckgas ausgeübt wird, vorteilhafterweise in Kombination mit einer Abkühlung durch strömendes Niedertemperaturgas (7, 8), das so ausgestaltet ist, dass es über die gesamte erste Oberfläche (10) strömt und in kontrollierter Weise über einen Gegendruckmechanismus austritt.

5. Verfahren nach einem der vorangegangenen Ansprüche, wobei die Kühlung unter Anwendung einer äußeren Kraft in Werkzeugeinsätzen durchgeführt wird, die so ausgebildet sind, dass sie eine elastische erste Biegemembran (46) mit einer ersten und einer zweiten gegenüberliegenden Fläche aufweisen, die an einer zugeordneten Seite des zumindest einen des ersten Kerns (45), des ersten Hohlraums, des zweiten Kerns, des zweiten Hohlraums befestigt ist und eine hermetisch dichte Verbindung an ihrer Umgebung herstellt, die einen geschlossenen Raum darin definiert, wobei die erste gegenüberliegende Fläche vorteilhafterweise in vollem Kontakt mit der ersten Oberfläche steht und ein Fluiddruck auf die zweite gegenüberliegende Fläche ausgeübt wird und die erste biegsame Membran sich bei Anwendung der Druckübertragungskraft auf die erste Oberfläche weiter verformt, wobei vorteilhafterweise die Kraftanwendung mit dem Durchgang eines unter Druck stehenden Wärmeaustauschfluids kombiniert wird, das Eintritts- und Austrittspunkte aufweist, die so ausgestaltet sind, dass es so geleitet wird, dass es im Wesentlichen über die gesamte zweite gegenüberliegende Fläche fließt, während der Druck aufrechterhalten wird, so dass eine Kühlung des ersten unter Druck stehenden Teils bereitgestellt wird.

6. Verfahren nach einem der vorangegangenen Ansprüche, bei dem das erste Teil (11) und/oder das umspritzte zweite Teil einen zentralen, im Allgemeinen wulstigen Bereich umfassen, der an seiner Umgebung von einem ebenen, dicken Bereich umgeben ist, und wobei die erste Biegemembran an einem beweglichen Kolben (50) angebracht ist, der mit dem wulstigen Bereich in Kontakt steht, wobei der Kolben zwei Enden aufweist, von denen das erste Ende mit dem ebenen, dicken Bereich in Kontakt steht und das andere Ende mit einem Mittel zur Betätigung des Kolbens verbunden ist, wobei der Kolben in die zugeordnete Seite von zumindest einem des ersten Kerns (54), des ersten Hohlraums (53), des zweiten Kerns, des zweiten Hohlraums integriert ist und die Kühlung unter Anwendung einer äußeren Kraft durch Vorschieben des Kolbens erfolgt, wobei eine Kraft auf den ebenen dicken Bereich ausgeübt wird und die erste flexible Membran einen flexiblen Kontakt mit dem wulstigen Bereich herstellt, der die Kraft aufrechterhält, während sich seine Größe und Form relativ zu dem ebenen flachen Bereich ändert, wenn er sich verfestigt, und beispielhaft wird der Kolben nur durch Anwendung von hydraulischem Druck vorgeschoben und die Kraft auf die erste flexible Membran nur beispielhaft ausgeübt Anwendung von hydraulischem oder pneumatischem Druck, wobei der Kolben vorteilhafterweise mit internen Wärmetauschermitteln versehen ist, durch die ein Wärmetauschermedium zirkuliert, und die Vorwärtsbewegung des Kolbens und die Anwendung von Kraft auf die erste Biegemembran entweder nacheinander oder gleichzeitig erfolgt und der Druck, der durch den Kolben und die erste Biegemembran auf das erste Teil ausgeübt wird, unabhängig voneinander gesteuert wird, wodurch der Kompressionsspritzgussprozess verbessert und die Spannung im Formteil reduziert wird.

7. Verfahren nach einem der vorangegangenen Ansprüche, wobei die zweite Abkühlung und/oder vierte Abkühlung unter Krafteinwirkung durchgeführt werden, die zumindest einen der folgenden Schritte umfassen:
- Formen des ersten Teils (60) in der ersten Kammer mit einem ersten Volumen, wobei entweder der erste Kern und/oder der erste Hohlraum mit einem unabhängig voneinander beweglichen Satz von Einsätzen (62, 63, 64, 65) mit internen Mitteln zur Wärmeabfuhr (73) versehen sind, die aus zumindest einem ersten Einsatz mit einem ersten und einem zweiten Ende und einem zweiten Einsatz mit einem ersten und einem zweiten Ende bestehen, wobei das erste Ende (71) des ersten Einsatzes (62) und das erste Ende (70) des zweiten Einsatzes (63) einen Teil der Formfläche bilden und das zweite Ende des ersten Einsatzes (62) und das zweite Ende des zweiten Einsatzes (63), wenn sie am weitesten davon entfernt sind, einstellbare Bewegungsanschläge (67') haben, wobei der erste Einsatz (62) und der zweite Einsatz (63) nur einen Freiheitsgrad haben, der eine Gleitbewegung relativ zueinander und zu dem ersten Kern und/oder dem ersten Hohlraum ermöglicht, die mit unabhängigen Betätigungsmitteln (67) verbunden werden können, und
- Aktivierung von unabhängig gesteuerten Betätigungsmitteln (67), die entweder in das zweite Ende des ersten Einsatzes (62) und das zweite Ende des zweiten Einsatzes (63) integriert oder mit diesen verbunden sind und diese gleichzeitig oder in einer programmierten Reihenfolge nach außen bewegen oder mit einem axialen Pulsieren in Bewegungsrichtung kombiniert werden.

8. Verfahren nach Anspruch 7, wobei die Bewegung des ersten Einsatzes (62) und des zweiten Einsatzes (63) fortgesetzt wird, bis sie ihre individuellen Bewegungsanschläge (67') erreichen, die so ausgebildet sind, dass am Ende der Bewegung das Volumen der ersten Kammer auf ein zweites Volumen reduziert wird, das dem des ersten Teils (60) im vollständig verfestigten Zustand weitgehend entspricht, und das erste Ende des ersten Einsatzes und das erste Ende des zweiten Einsatzes im Allgemeinen mit der endgültigen Form des verfestigten ersten Teils (60) übereinstimmen, wenn es auf eine vorbestimmte Ausstoßtemperatur abgekühlt ist, wodurch das erste Teil oder das überspritzte zweite Teil eine gleichmäßige Dichte aufweist und frei von inneren Hohlräumen und minimaler Spannung ist.

9. Verfahren nach einem der vorangegangenen Ansprüche, das zumindest einen der folgenden Schritte umfasst:
- Nach einer vorbestimmten Zeit in der Zwischenlagereinrichtung Übergabe des zweiten Verbundes an eine Übergabestation (Tauscheinrichtung), die unter einer kontrollierten Atmosphäre aus hochreinem Inertgas unter Überdruck gehalten wird, wo das darin enthaltene zweite Teil ausgeworfen wird, und Rückführung des leeren Satzes in die Lagereinrichtung, wo er vorteilhaft vorgewärmt wird, und/oder
- nach einer vorbestimmten Zeit in der Zwischenlagereinrichtung Übergabe des ersten Verbundes und eines leeren, vorgewärmten zweiten Satzes (88) an die Übergabestation, wo der im ersten Satz enthaltene erste Teil in den zweiten Satz (88) überführt und der leere erste Satz zurück in die Lagereinrichtung gebracht wird, wo er vorteilhaft vorgewärmt wird, und/oder
- nach dem Verriegeln des zweiten Satzes (88), der das erste Teil enthält, Übergabe des zweiten Satzes an die zweite Formstation, wo das erste Teil umgespritzt wird und wobei die zweite Formstation die gleiche sein kann wie die erste Formstation und, das zweite Formwerkzeug und das erste Formwerkzeug gleich sind und in der Lage sind, den ersten Satz (88) und den zweiten Satz (88) aufzunehmen, und die zweite Spritzgießmaschine und die erste Spritzgießmaschine gleich sind und die Möglichkeit haben, das Spritzgießen mit Parametern durchzuführen, die für jeden der Gießvorgänge eindeutig definiert sind, und das erste Harz und das zweite Harz gleich sind, und/oder
- Steuerung des gesamten Prozesses der Verbundübergabe, der Kühlung, der Teileübergabe und des Spritzgießens durch eine rechnergestützte Steuerung, die den ersten Verbund und den zweiten Verbund mit zugehörigen Prozessdaten identifiziert, beispielsweise durch einen RFID-Chip, der an jedem Verbund angebracht ist, und/oder
- Vorteilhafterweise wird zumindest ein Bereich der ersten Oberfläche und/oder der zweiten Oberfläche, der dauerhaft mit dem zweiten Teil verbunden werden soll, erhitzt oder aktiviert, und/oder
- Das erste Formwerkzeug und/oder das zweite Formwerkzeug kann aus Unterkavitäten bestehen, die für mehrere erste Teile und/oder zweite Teile ausgebildet sind.

10. Verfahren nach einem der vorangegangenen Ansprüche, wobei die Formwerkzeuganordnung mit Mitteln zum Auswerfen des darin enthaltenen Formteils versehen ist und in Zusammenarbeit mit der Übergabestation (Tauscheinrichtung), die das Teil auswirft, und der beweglichen Hälfte der Spritzgießmaschine einschließlich ihres Schlittens und der Auswerfmittel der Platzbedarf und die Kosten der Spritzgießmaschine verringert werden.

11. Verfahren nach einem der vorangegangenen Ansprüche, umfassend die folgenden Schritte
- Gießen von n1 ersten Teilen,
- Gießen von n2 zweiten Teilen,
- Gießen von n3 dritten Teilen,
- wobei die n1 ersten Teile, die n2 zweiten Teile und die n3 dritten Teile eine erste Komponente bilden und die Anzahl der Werkzeugsätze für das Formen des ersten Teils und des zweiten Teils und des dritten Teils so angeordnet ist, dass die Produktion kontinuierlich abläuft, ohne dass die Formmaschine auf einen der Werkzeugsätze wartet, während eines der ersten Teile, des zweiten Teils und des dritten Teils unter Anwendung einer äußeren Kraft in der Halteeinrichtung abgekühlt wird, während es vollständig in dem Werkzeugsatz enthalten ist, in dem es geformt wurde, ferner umfassend, dass die anderen Komponenten usw. in völlig flexibler Weise geformt werden können, wie es der Produktionsplan erfordert, auf das Formen der m1-Komponenten das Formen der m2-Komponenten und der m3-Komponenten folgt, wobei eine vollautomatische Produktionssequenz durch ein computergestütztes Planungsprogramm und Automatisierung ermöglicht wird, wobei ferner einige der ersten Teile, der zweiten Teile, der dritten Teile, der ersten Komponente, die zweite Komponente und die dritte Komponente usw. optional einer weiteren Verarbeitung unterzogen werden können, die das Vorbereiten des Umspritzens, des Beschneidens, des Lackierens, des Markierens, des Laserbeschriftens, des Prägens, des Klebens, des Montierens und des Verpackens umfasst, wobei die weitere Verarbeitung vorteilhafterweise außerhalb der Spritzgießmaschine stattfindet, während die Spritzgießmaschine ohne Verzögerung mit dem Spritzgießvorgang fortfährt.

12. Verfahren zum Gussformen nach einem der vorangegangenen Ansprüche, wobei in dem ersten Satz (1, 2) oder dem zweiten Satz zumindest eine Hilfsschmelzekammer (96) vorgesehen ist, die fließend mit der ersten Kammer oder der zweiten Kammer in Verbindung steht, und die Hilfsschmelzekammer (96) mit Mitteln zum Aufbringen von Druck auf die darin enthaltene Schmelze ausgestattet ist und mit Mitteln zum Aufbringen von Wärme auf die darin enthaltene Schmelze ausgestattet ist, umfassend die Schritte:
- Während des Einspritzens von Material in die erste Kammer oder die zweite Kammer wird zusätzliche Schmelze zum Füllen der Hilfskammer geleitet,
- Blockieren des Angusses (80), wenn das Teil geformt wird,
- während des Transports des ersten Verbundes oder des zweiten Verbundes zum Zwischenlager wird zusätzliche Schmelze aus der Hilfskammer (96) in die erste Kammer oder die zweite Kammer gedrückt,
- das Gewicht des Teils erhöht und das Risiko eines unkontrollierten Verzugs oder schrumpfungsinduzierter Vakuumblasen an der Innenseite des Formteils verringert
- wobei die Mittel zum Aufbringen der Kraft (97) und die erforderliche Energiequelle in dem ersten Satz (1, 2) oder dem zweiten Satz umfassend und/oder durch das Transportsystem bereitgestellt sind.

13. Verfahren zum Gussformen nach einem der vorangegangenen Ansprüche, wobei das Verfahren ein duroplastisches Teil und/oder eine Kombination aus Thermoplast und Duroplast umfasst, wobei das duroplastische Teil durch Anwendung von Wärme gehärtet wird und das thermoplastische Teil durch Wärmeentzug ausgebildet wird und vorteilhafterweise ein überformtes Teil erzeugt, das eine Kombination aus sowohl dem Duroplast als auch dem Thermoplast ist, wobei das duroplastische Teil beispielsweise flüssiger Silikongummi oder ein vulkanisierender Gummi ist und die Formmaschine mit Mitteln zum Einspritzen des flüssigen Silikongummis oder zum Einlegen der Vorform des vulkanisierenden Gummis ausgestattet ist.

14. Verfahren zum Gussformen nach einem der vorangegangenen Ansprüche, wobei während des Transports des ersten Verbundes oder des zweiten Verbundes zum Zwischenlager Mittel zum Kühlen unter Krafteinwirkung aktiviert werden und Mittel zum Kühlen (3) und zur Krafteinwirkung vorteilhafterweise im Werkzeugsatz (1, 2) umfassend und/oder durch das Transportsystem bereitgestellt werden.

15. Verfahren zum Gussformen nach einem der vorangegangenen Ansprüche, wobei die erste Verpackungsstufe oder die zweite Verpackungsstufe entweder ganz weggelassen oder um 50 % oder bevorzugter um 90 % reduziert wird.

## Revendications

1. Procédé pour mouler un article thermoplastique, comprenant les étapes suivantes :
- le moulage par injection au niveau d'un premier poste de moulage au niveau duquel est monté un premier ensemble d'outils de moulage (1, 2) qui comprend au moins ses éléments de définition de forme qui comprennent un premier noyau (2) et une première cavité (1), lesquels définissent deux surfaces opposées (5, 6) d'une première pièce à mouler et lesquels, lorsqu'ils sont complètement fermés, définissent, au niveau d'une surface de séparation, une première chambre (5, 6) qui renferme un premier volume fixe séparable, ledit premier ensemble d'outils de moulage comportant un moyen interne d'évacuation de la chaleur (3) et comprenant en outre un premier canal d'alimentation (80) qui assure la communication de façon fluidique entre la chambre et un passage de matière fondue de machine de moulage par injection (83) ;
- la fermeture du premier noyau (2, 84), de la première cavité (1, 85), du premier canal d'alimentation (80) et du moyen de blocage qui constituent un premier assemblage et qui sont destinés au processus de moulage, dans lequel, après la fermeture du premier noyau (2, 84) et de la première cavité (1, 85), la première pièce est moulée en injectant une première résine polymère souple via le premier canal d'alimentation (80) à l'intérieur de la première chambre jusqu'à ce que celle-ci soit complètement remplie conformément à des premiers paramètres de processus prédéterminés ;
- le refroidissement, au moyen d'un premier processus de refroidissement, en faisant passer un milieu de refroidissement au travers du moyen interne d'évacuation de la chaleur (3) ;
- l'introduction de matière additionnelle à l'intérieur de la première chambre (5, 6), laquelle matière additionnelle s'écoule via le premier canal d'alimentation (80) conformément à des deuxièmes paramètres de processus qui sont différents des premiers paramètres de processus ;
- le blocage du premier canal d'alimentation (80) après l'introduction de la matière additionnelle ; et
- à la suite du blocage du premier canal d'alimentation (80), le refroidissement encore au moyen d'un deuxième processus de refroidissement jusqu'à solidification en combinant le refroidissement avec l'application d'une force externe au niveau d'un poste de refroidissement (89), dans lequel l'application de la force externe déforme de manière adaptative au moins une surface de la première pièce et dans lequel le deuxième processus de refroidissement est mis en oeuvre de façon distale par rapport au poste de moulage.

2. Procédé selon la revendication 1, comprenant les étapes suivantes :
le surmoulage de la première pièce au niveau d'un second poste de moulage, lequel second poste de moulage peut être une partie d'une seconde machine de moulage, ledit second poste de moulage comprenant des outils de moulage d'un second ensemble d'outils de moulage qui comprennent des éléments de définition de forme et qui, lorsqu'ils sont complètement fermés, définissent une seconde chambre qui renferme un second volume fixe séparable au niveau de sa ligne de séparation depuis laquelle la deuxième pièce surmoulée peut être enlevée, ledit second ensemble d'outils de moulage (23, 24) comportant un moyen interne pour l'évacuation de la chaleur (7, 8) et comprenant en outre un second canal d'alimentation qui assure la communication de façon fluidique entre la seconde chambre et le second passage de matière fondue de machine de moulage, dans lequel le second noyau, la seconde cavité, le second canal d'alimentation et le moyen de blocage constituent le second assemblage et sont destinés au processus de production de la deuxième pièce surmoulée ; comprenant en outre les étapes suivantes :
- le positionnement de la première pièce au niveau d'une position prédéfinie à l'intérieur de l'espace qui est défini par le second noyau ou par la seconde cavité après la fermeture du second noyau et de la seconde cavité ;
- l'injection d'une seconde résine polymère souple via le second canal d'alimentation à l'intérieur de la seconde chambre soit sur un seul côté, soit sur les deux côtés de la première pièce qui est contenue à l'intérieur jusqu'à ce que la seconde chambre soit complètement remplie conformément à des troisièmes paramètres de processus prédéterminés qui sont différents des premiers et/ou deuxièmes paramètres de processus, et le refroidissement, au moyen d'un troisième processus de refroidissement, est poursuivi en faisant passer un milieu de refroidissement au travers du moyen interne d'évacuation de la chaleur (7, 8) ;
- l'introduction de matière additionnelle à l'intérieur de la seconde chambre, laquelle matière additionnelle s'écoule via le second canal d'alimentation conformément à des quatrièmes paramètres de processus qui sont différents des premiers, deuxièmes et/ou troisièmes paramètres de processus ; et
- le blocage du second canal d'alimentation immédiatement après la fin d'un second processus de compactage ; et
- le refroidissement, au moyen d'un quatrième processus de refroidissement sous l'effet de l'application d'une charge externe en faisant passer un milieu de refroidissement au travers du moyen interne d'évacuation de la chaleur (7, 8).

3. Procédé selon l'une quelconque des revendications 1 ou 2, dans lequel le deuxième processus de refroidissement ou le quatrième processus de refroidissement est mis en oeuvre de façon distale par rapport à la machine de moulage, comprenant les étapes suivantes :
- le blocage du premier assemblage (88) et/ou du second assemblage (88) pendant la présence afférente au niveau du poste de moulage respectif ;
- leur ou sa libération vis-à-vis de l'ensemble d'outils de moulage respectif ;
- le transfert d'un sous-ensemble en tant que premier kit qui est constitué par le premier assemblage (88) et par la première pièce (11) qui est contenue à l'intérieur et/ou en tant que second kit qui est constitué par le second assemblage (88) et par la deuxième pièce surmoulée (17, 18) qui est contenue à l'intérieur jusqu'à un site d'attente intermédiaire, comprenant un moyen d'alimentation en fluide à échange de chaleur et en option, un moyen de recirculation qui est connecté au moyen interne de transfert de la chaleur dans le premier assemblage et/ou dans le second assemblage, ce qui assure que la première pièce (11) ou la deuxième pièce (17, 18) n'est jamais exposée à l'atmosphère extérieure jusqu'à la fin du deuxième processus de refroidissement ou du quatrième processus de refroidissement qui est effectué à l'extérieur du poste de moulage respectif,
tandis que la première pièce (11) et/ou la deuxième pièce surmoulée (17, 18) sont ou est refroidie(s), la machine de moulage continue de mouler encore une autre première pièce ou encore une autre deuxième pièce surmoulée (17, 18) ou une troisième pièce indépendante de la première pièce (11) ou de la deuxième pièce surmoulée (17, 18), chacune de ces pièces disposant de ses propres paramètres de traitement uniques, ce qui améliore la productivité de la machine de moulage.

4. Procédé selon la revendication 3, dans lequel le processus de refroidissement sous l'effet de l'application d'une force externe est mis en oeuvre à l'intérieur d'inserts d'outil(s) qui sont configurés de telle sorte qu'ils forment un volume étanche aux gaz scellé entre la première surface et une face correspondante de l'insert d'outil(s) lorsque celui-ci est fermé, dans lequel un premier petit espace est développé lorsque la première pièce commence à subir un retrait lors de sa solidification, et une force uniforme sur sensiblement la totalité de la première surface est appliquée au moyen de l'application d'un gaz haute pression, laquelle application est combinée de manière avantageuse avec le processus de refroidissement en faisant s'écouler un gaz basse température (7, 8) qui est configuré de telle sorte qu'il s'écoule au-dessus de la totalité de la première surface (10) et qu'il sorte d'une manière commandée, contrôlée et régulée via un mécanisme de contre-pression.

5. Procédé selon l'une quelconque des revendications précédentes, dans lequel le processus de refroidissement sous l'effet de l'application d'une force externe est mis en oeuvre à l'intérieur d'inserts d'outil(s) qui sont configurés de telle sorte qu'ils comportent une première membrane à fléchissement élastique (46) qui comporte des première et seconde faces opposées qui sont fixées sur un côté correspondant de l'au moins un composant constitutif pris parmi le premier noyau (45), la première cavité, le second noyau, la seconde cavité, d'où ainsi la réalisation d'une connexion hermétiquement étanche au niveau de sa périphérie qui définit un espace fermé en son sein, dans lequel la première face opposée est de manière avantageuse en contact intégral avec la première surface et une pression de fluide est appliquée sur la seconde face opposée et la première membrane à fléchissement élastique continue à se déformer lors de l'application de la force de transmission de pression sur la première surface, de manière avantageuse, l'application de la force est combinée avec le passage d'un fluide à échange de chaleur sous pression moyennant des points d'entrée et de sortie qui sont configurés de telle sorte que ledit fluide à échange de chaleur soit dirigé de manière à ce qu'il s'écoule sensiblement au-dessus de la totalité de la seconde face opposée, tout en maintenant la pression, ce qui assure le refroidissement de la première pièce sous l'effet de la force.

6. Procédé selon l'une quelconque des revendications précédentes, dans lequel la première pièce (11) et/ou la deuxième pièce surmoulée comprennent ou comprend une zone centrale à caractéristique générale bulbeuse qui est entourée par une zone épaisse plane au niveau de sa périphérie et dans lequel la première membrane à fléchissement élastique est montée sur un piston mobile (50) qui entre en contact avec la zone centrale à caractéristique générale bulbeuse, et le piston comportant deux extrémités, soit une première extrémité qui est en contact avec la zone épaisse plane et une autre extrémité qui est connectée à un moyen d'actionnement du piston, le piston est intégré à l'intérieur d'un côté correspondant d'au moins un composant constitutif pris parmi le premier noyau (54), la première cavité (53), le second noyau, la seconde cavité, et le refroidissement sous l'effet de l'application d'une force externe est mis en oeuvre en faisant avancer le piston qui applique la force sur la zone épaisse plane, et la première membrane à fléchissement élastique réalise un contact souple avec la zone centrale à caractéristique générale bulbeuse, ce qui assure le maintien de la force lorsque sa dimension et sa forme varient par rapport à la zone épaisse plane lors de la solidification et à titre d'exemple, seulement le piston est avancé au moyen de l'application d'une pression hydraulique et de l'application d'une force sur la première membrane à fléchissement élastique et à titre d'exemple, cette application est seulement l'application d'une pression hydraulique ou d'une pression pneumatique, et de manière avantageuse, le piston est muni d'un moyen interne d'échange de chaleur par l'intermédiaire duquel un milieu à échange de chaleur circule, et l'avancement du piston et l'application de la force sur la première membrane à fléchissement élastique soit sont séquentiels, soit sont simultanés, et la pression qui est exercée sur la première pièce par le piston et par la première membrane à fléchissement élastique est commandée, contrôlée et régulée de manière indépendante, ce qui améliore le processus de moulage par injection à compression et réduit les contraintes dans l'article moulé.

7. Procédé selon l'une quelconque des revendications précédentes, dans lequel le deuxième processus de refroidissement et/ou le quatrième processus de refroidissement sous l'effet de l'application d'une force sont ou est mis en oeuvre, comprenant au moins l'une des étapes suivantes :
- le moulage de la première pièce (60) à l'intérieur de la première chambre qui présente un premier volume, dans lequel soit le premier noyau, soit la première cavité, soit à la fois le premier noyau et la première cavité est ou sont muni(e)(s) d'un assemblage d'inserts mobile de façon indépendante (62, 63, 64, 65) qui comporte un moyen interne d'évacuation de la chaleur (73) et qui est constitué par au moins un premier insert qui comporte des première et seconde extrémités et un second insert qui comporte des première et seconde extrémités, dans lequel la première extrémité (71) du premier insert (62) et la première extrémité (70) du second insert (63) constituent une partie de la surface de moulage et la seconde extrémité du premier insert (62) et la seconde extrémité du second insert (63), lors de leur retrait davantage en dehors, comportent des moyens d'arrêt à déplacement réglable (67'), dans lequel le premier insert (62) et le second insert (63) disposent de seulement un degré de liberté qui permet un déplacement coulissant de l'un par rapport à l'autre ainsi que par rapport au premier noyau et/ou à la première cavité, lesquels peuvent être connectés à des moyens d'actionnement indépendants (67) ; et
- l'activation d'actionneurs commandés indépendamment (67) qui soit sont intégrés dans la seconde extrémité du premier insert (62) et dans la seconde extrémité du second insert (63), soit leur sont connectés, en les déplaçant vers l'extérieur simultanément ou selon une séquence programmée ou en combinaison avec le fait de leur imprimer des impulsions axiales dans la direction de déplacement.

8. Procédé selon la revendication 7, dans lequel le déplacement du premier insert (62) et du second insert (63) se poursuit jusqu'à ce qu'ils atteignent leurs moyens d'arrêt de déplacement individuels (67') qui sont configurés de telle sorte qu'à la fin du déplacement, le volume de la première chambre soit réduit selon un second volume qui correspond de façon étroite à celui de la première pièce (60) lorsqu'elle est complètement solidifiée, et la première extrémité du premier insert et la première extrémité du second insert coïncident de façon générale avec la forme finale de la première pièce solidifiée (60) lorsqu'elle est refroidie jusqu'à une température d'éjection prédéterminée qui permet de produire la première pièce ou la deuxième pièce surmoulée qui présente une densité uniforme, qui est exempte de vides internes et qui présente une contrainte minimum.

9. Procédé selon l'une quelconque des revendications précédentes, comprenant les étapes d'au moins l'une des étapes suivantes :
- après un temps prédéterminé au niveau du site d'attente intermédiaire, le transfert du second kit jusqu'à un poste de transfert (poste d'échange) qui est maintenu sous une atmosphère commandée, contrôlée et régulée de gaz inerte haute pureté à pression positive, poste de transfert au niveau duquel la deuxième pièce contenue à l'intérieur est éjectée, et l'assemblage vide est retourné au site d'attente intermédiaire au niveau duquel il est de manière avantageuse préchauffé ; et/ou
- après un temps prédéterminé au niveau du site d'attente intermédiaire, le transfert du premier kit et d'un second assemblage préchauffé vide (88) jusqu'au poste de transfert intermédiaire au niveau duquel la première pièce qui est contenue à l'intérieur du premier assemblage est transférée au second assemblage (88) et le premier assemblage vide est retourné au site d'attente intermédiaire au niveau duquel il est de manière avantageuse préchauffé ; et/ou
- après le blocage du second assemblage (88) qui contient la première pièce, le transfert du second assemblage jusqu'au second poste de moulage au niveau duquel la première pièce est surmoulée et dans lequel le second poste de moulage peut être le même que le premier poste de moulage, et le second outil de moulage et le premier outil de moulage sont les mêmes et disposent de la capacité de recevoir le premier assemblage (88) et le second assemblage (88), et la seconde machine de moulage par injection et la première machine de moulage par injection sont les mêmes et disposent de la capacité de mettre en oeuvre un moulage par injection à l'aide de paramètres qui sont définis de façon unique pour chacune des opérations de moulage, et la première résine et la seconde résine sont les mêmes ; et/ou
- la commande de l'intégralité du processus constitué par le transfert de kit, le refroidissement, le transfert de pièce et le moulage par injection au moyen d'une commande informatisée qui identifie le premier kit et le second kit à l'aide de données de processus associées, par exemple au moyen d'une puce d'identification radiofréquence/RFID qui est montée sur chaque kit ; et/ou
- de manière avantageuse, au moins une section de la première surface et/ou de la seconde surface qui doit être liée de façon permanente avec la deuxième pièce est chauffée ou activée ; et/ou
- le premier outil de moulage et/ou le second outil de moulage peuvent ou peut être constitué(s) par des sous-cavités qui sont configurées pour de multiples premières pièces et/ou de multiples deuxièmes pièces.

10. Procédé selon l'une quelconque des revendications précédentes, dans lequel l'ensemble d'outils de moulage est muni d'un moyen permettant d'éjecter la pièce moulée qui est contenue à l'intérieur et permettant, en coopération avec le poste de transfert (le poste d'échange), d'éjecter la pièce, et la moitié mobile de la machine de moulage par injection incluant sa glissière et des moyens d'éjection sont éliminés, ce qui réduit l'espace au sol requis et le coût de la machine de moulage par injection.

11. Procédé selon l'une quelconque des revendications précédentes, comprenant les étapes suivantes :
- le moulage de n1 premières pièces ;
- le moulage de n2 deuxièmes pièces ; et
- le moulage de n3 troisièmes pièces ;
dans lequel les n1 premières pièces, les n2 deuxièmes pièces et les n3 troisièmes pièces constituent un premier composant et les assemblages d'outils du nombre d'assemblages d'outils pour le moulage de la première pièce, de la deuxième pièce et de la troisième pièce sont agencés de telle sorte que la production se déroule d'une façon continue sans que la machine de moulage n'ait à attendre l'un quelconque des assemblages d'outils tandis qu'une quelconque pièce ou que certaines quelconques pièces prise(s) parmi la première pièce, la deuxième pièce et la troisième pièce est ou sont en train d'être soumise(s) à un refroidissement sous l'effet de l'application d'une force externe au niveau du site d'attente intermédiaire tout en étant complètement contenue(s) à l'intérieur de l'assemblage d'outils à l'intérieur duquel elle a ou elles ont été moulée(s), comprenant en outre le fait que les autres composants et accessoires peuvent être moulés d'une manière complètement souple à la demande de la planification de production, le moulage de m1 premiers composants est suivi par le moulage de m2 deuxièmes composants qui est suivi par le moulage de m3 troisièmes composants, dans lequel une séquence de production complètement automatisée est rendue possible au moyen d'un programme de planification informatisé et d'une automatisation, en outre un quelconque constituant ou certains quelconques constituants pris parmi la première pièce, la deuxième pièce, la troisième pièce, le premier composant, le deuxième composant et le troisième composant et accessoires peut ou peuvent en option faire l'objet d'un autre traitement incluant les opérations de préparation pour le surmoulage, d'ébavurage ou d'ébarbage, de peinture, de marquage, d'inscription au laser, d'embossage, de collage, d'assemblage et de compactage, et l'autre traitement est de manière avantageuse effectué à l'extérieur de la machine de moulage par injection tandis que la machine de moulage par injection poursuit son opération de moulage sans retard.

12. Procédé de moulage selon l'une quelconque des revendications précédentes, dans lequel, dans le premier assemblage (1, 2) ou dans le second assemblage, est prévue au moins une chambre de matière fondue auxiliaire (96) qui assure la communication de façon fluidique avec la première chambre ou avec la seconde chambre, et la chambre de matière fondue auxiliaire (96) est munie d'un moyen d'application de pression sur la matière fondue qui est contenue à l'intérieur et est munie d'un moyen d'application de chaleur sur la matière fondue qui est contenue à l'intérieur, comprenant les étapes suivantes :
- pendant l'injection de matière dans la première chambre ou dans la seconde chambre, de la matière fondue additionnelle est dirigée pour remplir la chambre de matière fondue auxiliaire ;
- le blocage du canal d'alimentation (80) lorsque la pièce est moulée ;
- tandis que le premier kit ou le second kit est en train d'être transporté jusqu'au site d'attente intermédiaire, de la matière fondue additionnelle en provenance de la chambre de matière fondue auxiliaire (96) est introduite de manière forcée à l'intérieur de la première chambre ou de la seconde chambre ; et
- l'augmentation du poids des pièces et la réduction du risque de gauchissement ou de retrait non contrôlé induit par des bulles de vide à l'intérieur de la pièce moulée,
- dans lequel le moyen d'application de force (97) et la source d'énergie requise sont inclus dans le premier assemblage (1, 2) ou dans le second assemblage et/ou sont fournis par le système de transport.

13. Procédé de moulage selon l'une quelconque des revendications précédentes, ledit procédé comprenant une pièce thermoset ou thermodurcie et/ou une combinaison de pièces thermoplastique(s) et thermodurcie(s), dans lequel la pièce thermodurcie est durcie au moyen de l'application de chaleur et la pièce thermoplastique est formée par évacuation de la chaleur et de manière avantageuse, le procédé permet de produire une pièce surmoulée qui est une combinaison à la fois de la pièce thermodurcie et de la pièce thermoplastique, à titre d'exemple la pièce thermodurcie est en caoutchouc silicone liquide ou en un caoutchouc pour vulcanisation et la machine de moulage est munie d'un moyen d'injection du caoutchouc silicone liquide ou de positionnement d'une préforme en un caoutchouc pour vulcanisation.

14. Procédé de moulage selon l'une quelconque des revendications précédentes, dans lequel, pendant le transport du premier kit ou du second kit jusqu'au site d'attente intermédiaire, un moyen de refroidissement sous l'effet de l'application d'une force est activé pendant le transit et un moyen de refroidissement (3) et d'application de force est de manière avantageuse inclus dans l'assemblage d'outils (1, 2) et/ou est fourni par le système de transport.

15. Procédé de moulage selon l'une quelconque des revendications précédentes, dans lequel la première étape de compactage ou la seconde étape de compactage est soit complètement omise, soit réduite de 50 % ou de manière davantage préférable, de 90 %.
